(19) Europäisches Patentamt

European Patent Office

Office européen des brevets

(11) **EP 4 437 865 B1**

(12) **EUROPEAN PATENT SPECIFICATION**

(45) Date of publication and mention of the grant of the patent:
**01.04.2026 Bulletin 2026/14**

(21) Application number: **22916661.6**

(22) Date of filing: **26.12.2022**

(51) International Patent Classification (IPC):
*A24D 3/06* (2006.01)    *D01D 5/06* (2006.01)
*D01D 5/22* (2006.01)    *D01F 2/00* (2006.01)
*B01D 39/18* (2006.01)    *A24D 3/10* (2006.01)
*D06M 13/224* (2006.01)    *A24D 3/14* (2006.01)

(52) Cooperative Patent Classification (CPC):
**D01D 5/06; A24D 3/063; A24D 3/068; A24D 3/10; A24D 3/14; B01D 39/18; D01D 5/22; D01F 2/00; D06M 13/224;** B01D 2239/10

(86) International application number:
**PCT/KR2022/021311**

(87) International publication number:
**WO 2023/128520 (06.07.2023 Gazette 2023/27)**

(54) **LYOCELL MATERIAL, SMOKING ARTICLE FILTER, SMOKING ARTICLE, AND METHOD FOR MANUFACTURING SAME**

LYOCELLMATERIAL, RAUCHARTIKELFILTER, RAUCHARTIKEL UND VERFAHREN ZUR HERSTELLUNG DAVON

MATÉRIAU LYOCELL, FILTRE POUR ARTICLE DE FUMEUR, ARTICLE DE FUMEUR ET SON PROCÉDÉ DE FABRICATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.12.2021   KR 20210190180**
**28.12.2021   KR 20210190181**

(43) Date of publication of application:
**02.10.2024 Bulletin 2024/40**

(60) Divisional application:
**24188363.6 / 4 442 898**

(73) Proprietors:
• **Kolon Industries, Inc.**
**Seoul 07793 (KR)**
• **KT&G Corporation**
**Daedeok-gu**
**Daejeon 34337 (KR)**

(72) Inventors:
• **JEONG, Young Han**
**Seoul 07793 (KR)**

• **YANG, Ji Eun**
**Seoul 07793 (KR)**
• **JEONG, Jong Cheol**
**Seoul 07793 (KR)**
• **JIN, Sang Woo**
**Seoul 07793 (KR)**
• **HWANG, Yeong Nam**
**Seoul 07793 (KR)**
• **MA, Kyengbae**
**Daejeon 34128 (KR)**
• **HA, Sunghoon**
**Daejeon 34128 (KR)**
• **YANG, Jin-Chul**
**Daejeon 34128 (KR)**
• **CHEONG, Bong Su**
**Daejeon 34128 (KR)**

(74) Representative: **Isarpatent**
**Patent- und Rechtsanwälte**
**Barth Hassa Peckmann & Partner mbB**
**Friedrichstraße 31**
**80801 München (DE)**

(56) References cited:
CN-A- 104 395 510    CN-A- 105 658 852
CN-A- 106 661 768    CN-A- 112 323 161
KR-A- 20070 039 547   KR-A- 20160 081 726
KR-A- 20160 081 726   KR-B1- 101 455 006
US-A1- 2019 075 842   US-A1- 2021 244 088
US-A1- 2021 315 255   US-A1- 2021 315 255

**Description**

Technical Field

<u>Cross-Reference with Related Applications</u>

This application claims the benefits of priority based on Korean Patent Application No. 10-2021-0190180, dated December 28, 2021, and Korean Patent Application No. 10-2021-0190181, dated December 28, 2021, and all content disclosed in these Korean patent applications is incorporated as part of this specification.

Technical Field

This application relates to a lyocell material, a filter and a smoking article including the same, and a method of manufacturing these.

Background Art

Until now, cellulose acetate fiber has been mainly used as a cigarette filter material. Cellulose acetate is known to be a biodegradable material, but filters for a smoking article made of cellulose acetate remain in their original form for 1 to 2 years even after being buried in soil, and a considerable amount of time is required until the filters are completely biodegraded. Considering the amount and toxicity of tobacco products that are disposed of and left in the living environment as well as those that are recovered as waste and landfilled after being used for smoking, there is a need to further improve the biodegradability of filters for a smoking article. Accordingly, recently, a more environmentally friendly lyocell has been selected as a material to replace cellulose acetate.

On the other hand, an oil treatment may be performed to manufacture tow for smoking article filters. The moisture absorption rate of lyocell tow that has been treated with an ordinary oil is about 10%, which is higher than that for cellulose acetate tow, which is 5% (the moisture absorption rate is measured by using a moisture analyzer, which is combined with a scale capable of measuring moisture drying loss, and a drying oven, in which tow of which the weight is measured in advance is left at about 105 °C, and then the weight thereof is measured when no further weight loss occurs, and then compared with the original weight). Accordingly, the hardness of the filter including lyocell tow is lower compared to the filter including cellulose acetate tow, and in actual use, a collapse in hardness due to saliva occurs more quickly when a filter including lyocell tow is used. For example, when smoking (depending on the user or the situation), a user may hold a cigarette in their mouth. In this case, saliva gets into the cigarette tip or filter and the stiffness (hardness) of the original filter for a smoking article would be reduced, and the reduction in stiffness may be considered poor quality by smokers. Therefore, cigarette manufacturers seek to create products that do not collapse or have a low degree of collapse and that maintain the original shape of the filter formed during product manufacturing, even if saliva is introduced CN112323161 discloses lyocell material for cigarette filters with 0,2wt% oil content.

In this aspect, there is a need to develop a filter material that can replace conventional cellulose acetate materials t, have excellent hardness, and provide excellent quality or user satisfaction.

Disclosure

Technical Problem

One objective of the present application is to provide a lyocell material that replaces commercially available cellulose acetate for filters for a smoking article.

Another objective of the present application is to provide a lyocell material for smoking article filters of which manufacturing process is environmentally friendly and which has excellent biodegradability upon disposal.

Another objective of the present application is to provide a lyocell material for smoking article filters with little change in hardness upon moisture permeation.

Another objective of the present application is to provide a lyocell filter for a smoking article.

Another objective of the present application is to provide a smoking article (for example, cigarette) including a lyocell filter.

Another objective of the present application is to improve processability in connection with the manufacture of the lyocell materials, filters, and smoking articles described above.

The above and other objectives of the present application may all be solved by the disclosure of the present application described in detail below.

Technical Solutions

Embodiments of the present application may provide a lyocell material, filters and smoking articles including the same.

There are difficulties as described above in replacing the conventionally used cellulose acetate tow with lyocell tow. In other words, since the moisture absorption rate (or water content) of lyocell tow is generally higher than that of cellulose acetate tow, the hardness collapse due to saliva occurs quickly. This can be addressed by treating tow with a hydrophobic binder. However, the method of treating the highly hydrophilic lyocell with a hydrophobic binder has limitations in improving the hardness of filters due to compatibility issues. In addition, the poor compatibility issues may also adversely affect the manufacturing processability of filters or smoking articles (for example, cigarettes).

In this aspect, the inventor of the present application treated the lyocell material with a specific oil to overcome the hydrophilicity of the lyocell surface, improve compatibility with the binder, and improve the degree of hardness reduction due to needles (for example, capable of providing a similar or equivalent level of hardness when compared to a cellulose acetate filter of the related art), thereby completing the disclosure of the present application.

Specifically, an embodiment of the present application may provide a lyocell material including: a lyocell multifilament to which a crimp is applied; and an oil applied on the lyocell multifilament, wherein the oil includes (a) an esterification product of a fatty acid having at least 16 carbon atoms and an aliphatic monohydric alcohol, and (b) an esterification product of sorbitan and a fatty acid having at least 16 carbon atoms.

Herein disclosed is (not according to the invention) a lyocell material including: a lyocell multifilament to which a crimp is applied; and an oil applied on the lyocell multifilament, wherein a sinking time of the lyocell material in water is at least 6.0 seconds.

An embodiment of the present application may provide a filter for a smoking article including a lyocell material, wherein the lyocell material includes a lyocell multifilament to which a crimp is applied, and an oil applied on the lyocell multifilament, and the oil includes (a) an esterification product of fatty acid having at least 16 carbon atoms and an aliphatic monohydric alcohol and (b) an esterification product of sorbitan and fatty acid having at least 16 carbon atoms.

Herein dislosed is (not according to the invention) a filter for a smoking article, wherein the filter has the diameter retention ratio before water injection, which is calculated according to Equation 1-1 expressing the degree of change in hardness of the filter for a smoking article, of at least 85%, and the diameter retention ratio after water injection, which is calculated according to Equation 1-2, of at least 80%.

An embodiment of the present application may provide a smoking article including the lyocell material or the filter.

An embodiment of the present application may provide a method of manufacturing the lyocell material, and the filter and the smoking article, each including the same.

Herein disclosed is (not according to the invention) an oil that may modify the hydrophilicity of the surface of the lyocell material to hydrophobicity and improve the degree of hardness reduction of the filter for a smoking article due to moisture.

The term "smoking article" used herein refers to an article that is able to generate aerosol, such as a cigarette, cigar, etc. In this regard, smoking articles may include an aerosol-generating material or an aerosol-forming substrate. In some embodiments, smoking articles may include solid materials based on tobacco raw materials, such as leaf tobacco, cut tobacco, reconstituted tobacco, etc. In some embodiments, smoking materials may include volatile compounds.

Unless specifically defined otherwise in the specification, in the case where the properties of lyocell materials, filters for a smoking article, and components or compositions related thereto are affected by temperature, the temperature at which the properties are confirmed or measured, may be room temperature. In this regard, the room temperature is a temperature which is not particularly reduced or heated, and may be, for example, 10°C to 35°C, for example, 15°C to 35°C, 20°C to 30°C, or about 25°C.

Hereinafter, the disclosure of this application will be described in more detail.

An aspect of the present application relates to a lyocell material for filters for a smoking article.

In some embodiments, the lyocell material may include: a lyocell multifilament to which a crimp is applied; and an oil applied on the lyocell multifilament. In some embodiments, the oil may include (a) an esterification product of a fatty acid having at least 16 carbon atoms and an aliphatic monohydric alcohol; and (b) an esterification product of sorbitan and a fatty acid having at least 16 carbon atoms. The oil may be applied to some or all of the mono or multifilaments that constitute the lyocell material. In some embodiments, the oil may permeate between filaments.

An oil including at least the components (a) and (b) may have hydrophobicity. Accordingly, the oil may solve the issues associated with of the hydrophilicity of the lyocell surface, vulnerability thereof to moisture, and the resulting decrease in hardness of the filter. In some embodiments, the oil has excellent compatibility with a binder component described later.

In an embodiment of the present application, the lyocell material may include a predetermined amount of the oil. In this regard, the amount of the oil may refer to oil pick up ratio (OPU) (wt%), which will be described later. For example, the lyocell material may include an oil in an amount of at least 2.0 wt%, based on 100 wt% of the total amount of the lyocell material. In some embodiments, the amount of the oil may be 2.5 wt%, at least 3.0 wt%, at least for example, at least 3.5 wt%, at least 4.0 wt%, at least 4.5 wt%, at least 5.0 wt%, at least 5.5 wt%, at least 6.0 wt%, at least 6.5 wt%, at least 7.0 wt%, at least 7.5 wt%, at least 8.0 wt%, at least 8.5 wt%, at least 9.0 wt%, or at least 9.5 wt%. The upper limit thereof may be, for example, 15.0 wt% or less, 14.5 wt% or less, 14.0 wt% or less, 13.5 wt% or less, 13.0 wt% or less, 12.5 wt% or less, 12.0 wt% or less, 11.5 wt% or less, 11.0 wt% or less, 10.5 wt% or less, 10 wt% or less, 9.5 wt% or less, 9.0 wt% or less, 8.5 wt% or less, 8.0 wt% or less, 7.5 wt% or less, 7.0 wt% or less, 6.5 wt% or less, 6.0 wt% or less, 5.5 wt% or less, 5.0 wt% or less, 4.5 wt% or less, 4.0 wt% or less, or 3.5 wt% or less.

As a method of measuring the content (OPU) of the oil, for example, an extrusion method may be used. For example, a sample (for example, 2 to 5 g, specifically about 2.5 g) is collected (in this regard, the weight of the collected sample is referred to as the sample weight), and the sample is put into a syringe-shaped container. The material of the container is not particularly limited, and may be a stainless (SUS) material. Next, a solvent (for example, methanol) is added to the container in which the sample has been added (the amount of solvent added may be 10 ml or less (for example, about 8 ml)). When the solvent is added to the sample, a dropping method may be used, and the dropping speed may be adjusted uniformly. Then, the solvent introduced into the container as described above is allowed to fall onto a plate from one end of the syringe-shaped container. In this regard, the plate is pre-weighed (the measured weight is referred to as plate weight A), and the plate is provided to allow the solvent dropped on the plate to be removed away at a temperature of 120°C to 130°C (for example, 125°C) (i.e., to allow for evaporation). The solvent addition and solvent dropping are performed three times, and pressure (for example, 10 kgf/cm2 or less, 5 kgf/cm2, or 2-4 kgf/cm2) is applied to the sample using a syringe-shaped container to press the sample once. As a result, the solvent and oil present in the sample are sufficiently extruded. The sample was squeeze out by applying pressure until no solvent comes out. Afterwards, the plate is kept in a desiccator for 5 minutes to 10 minutes, and the weight of the plate with the sample thereon is measured (plate weight B). Then, the amount of the oil is calculated according to the following formula:

$$\text{Equation}$$
$$\text{Amount of oil by extrusion (OPU, \% or wt\%)}$$
$$= \{(\text{Plate Weight B} - \text{Plate Weight A})/(\text{Sample Weight})\} \times 100$$

In addition, the lyocell material that is used as a reference for the oil amount may be a lyocell multifilament that is treated with at least an oil. For example, the lyocell material may be a lyocell multifilament to which a first oil treatment (described below) is applied, a lyocell multifilament to which a first oil treatment and a second oil treatment (described below) are applied, or a lyocell multifilament to which a binder, which will be described later, as well as the oil treatment described above, are applied. In addition, the lyocell multifilament treated with oil and/or a binder as described above may be a lyocell multifilament to which a crimp is applied.

In relation to the oil of the present application, component (a) may be a compound that may function as a kind of lubricant or oil and may be a component that is harmless to the human body enough to be used in food. Component (a) provides lubricity to the fibers fed into a crimper. When the lubricity is not sufficient, the lyocell may clump together and may not escape the crimper, and when the lubricity is too high, a crimp may not form easily. The amount of component (a) may be controlled in consideration of these functions, as described later.

Regarding component (a), the type of fatty acid having at least 16 carbon atoms, constituting the same, is not particularly limited. Fatty acids with at least 16 carbon atoms that provide esterification products that are harmless to the human body enough to be used in food, may be used.

For example, saturated fatty acids and/or unsaturated fatty acids may be used as fatty acids having at least 16 carbon atoms.

Saturated fatty acids include, for example, palmitic acid (hexadecanoic acid, $CH_3(CH_2)_{14}COOH$), margaric acid (heptadecanoic acid, $CH_3(CH_2)_{15}COOH$), stearic acid (octadecanoic acid, $CH_3(CH_2)_{16}COOH$), nonadecylic acid (non-adecanoic acid, $CH_3(CH_2)_{17}COOH$), or arachidic acid (eicosanoic acid, $CH_3(CH_2)_{18}COOH$). However, the types of saturated fatty acids that can be used herein, are not limited thereto.

Unsaturated fatty acids include, for example, pallitoleic acid ($CH_3(CH_2)_5CH=CH(CH_2)_7COOH$), oleic acid ($CH_3(CH_2)_7CH=CH(CH_2)_7COOH$), linoleic acid ($C_{18}H_{32}O_2$), or arachidonic acid ($C_{20}H_{32}O_2$). However, the types of unsaturated fatty acids that can be used herein, are not limited thereto.

The upper carbon number limit of the fatty acid having at least 16 carbon atoms is not particularly limited, and may be, for example, 40 or less, 36 or less, 32 or less, 28 or less, 24 or less, or 20 or less.

Regarding component (a), the type of aliphatic monohydric alcohol constituting the same is also not particularly limited. Aliphatic monohydric alcohols that provide esterification products that are harmless to the human body enough to be used in food, may be used.

For example, component (a) may be a saturated aliphatic alcohol or an unsaturated aliphatic alcohol, which may be a linear or branched form.

In an embodiment, the aliphatic monohydric alcohol may have 1 to 40 carbon atoms. In some embodiments, the carbon number of the aliphatic monohydric alcohol may be, for example, at least 4, at least 8, at least 12, at least 16, or at least 20.

Examples of the aliphatic monohydric alcohols are, but are not limited to, methanol, ethanol, butanol, lauryl alcohol, isotridecanol, or stearyl alcohol.

In an embodiment of the present application, component (a) may be an esterification product of isotridecanol and stearic acid (for example, isotridecyl stearate). However, the types of component (a) that can be used herein, are not limited thereto.

As will be described later, the amount of component (a) included in the oil may be adjusted in consideration of the function of the oil or the function of component (a).

The component (b), that is, an esterification product of sorbitan and a fatty acid having at least 16 carbon atoms, is a compound that may function as a kind of emulsifier and is harmless enough to the human body to be used in food.

Since component (b) has both hydrophilic and hydrophobic properties due to polyhydric alcohol (i.e., sorbitan), component (a), which provides lubricity to the fiber, may be well dispersed in water, which will be described later. In addition, components (a) and (b) used together not only increase the dispersibility of the oil as described above, but also lower the melting point of the oil, thereby ensuring the handling and stability of the oil. The amount of component (b) may be controlled as described later in consideration of this function.

Regarding component (b), the type of fatty acid having at least 16 carbon atoms, constituting the same, is not particularly limited. Fatty acids with at least 16 carbon atoms that provide esterification products that are harmless to the human body enough to be used in food, may be used.

For example, saturated fatty acids and/or unsaturated fatty acids may be used as fatty acids having at least 16 carbon atoms.

Saturated fatty acids include, for example, palmitic acid (hexadecanoic acid, $CH_3(CH_2)_{14}COOH$), margaric acid (heptadecanoic acid, $CH_3(CH_2)_{15}COOH$), stearic acid (octadecanoic acid, $CH_3(CH_2)_{16}COOH$), nonadecylic acid (nonadecanoic acid, $CH_3(CH_2)_{17}COOH$), or arachidic acid (eicosanoic acid, $CH_3(CH_2)_{18}COOH$). However, the types of saturated fatty acids that can be used herein, are not limited thereto.

Unsaturated fatty acids include, for example, pallitoleic acid ($CH_3(CH_2)_5CH=CH(CH_2)_7COOH$), oleic acid ($CH_3(CH_2)_7CH=CH(CH_2)_7COOH$), linoleic acid ($C_{18}H_{32}O_2$), or arachidonic acid ($C_{20}H_{32}O_2$). However, the types of saturated fatty acids that can be used herein, are not limited thereto.

The upper carbon number limit of the fatty acid having at least 16 carbon atoms is not particularly limited, and may be, for example, 40 or less, 36 or less, 32 or less, 28 or less, 24 or less, or 20 or less.

In an embodiment of the present application, component (b) may be an esterification product of sorbitan and oleic acid (for example, sorbitan monooleate). However, the types of component (b) that can be used herein, are not limited thereto.

The amount of component (b) may be adjusted considering the function of component (b) and the function of the oil as described above.

In an embodiment, the oil may include, based on 100 parts by weight of (a) an esterification product of a fatty acid having at least 16 carbon atoms and an aliphatic monohydric alcohol, 20 parts by weight to 60 parts by weight of (b) an esterification product of sorbitan and a fatty acid having at least 16 carbon atoms.

In some embodiments, the oil of the present application may include at least 25 parts by weight, at least 30 parts by weight, at least 35 parts by weight, at least 40 parts by weight, at least 45 parts by weight, or at least 50 parts by weight of component (b), based on 100 parts by weight of component (a). The upper limit of the amount of component (b) based on 100 parts by weight of component (a), may be, for example, 55 parts by weight or less, 50 parts by weight or less, 45 parts by weight or less, 40 parts by weight or less, 35 parts by weight or less, 30 parts by weight or less, or 25 parts by weight or less. Within these ranges of amount, the surface of the oil-treated lyocell multifilament or lyocell tow, which is treated with oil, may have hydrophobicity, and as a result, the excessive decrease in hardness of the filter due to moisture (for example, saliva) permeation may be prevented.

In an embodiment, the oil may further include, as component (c), an alkylene oxide adduct with respect to the component (b). Component (c) may function as a kind of emulsifier. The compound may also be selected from those that are harmless enough to the human body to be used in food.

Regarding component (c), the type of alkylene oxide is not particularly limited, and for example, the alkylene oxide may have 2 to 4 carbon atoms. Specifically, with respect to component (c), ethylene oxide, propylene oxide, and/or butylene oxide may be used, but are not limited thereto.

The number of moles of alkylene oxide added is not particularly limited. For example, the number of added moles of alkylene oxide may be 1 to 100, 5 to 80, 10 to 60, or 15 to 40.

In an embodiment of the present application, component (c) may be an esterification product of a PEO adduct of sorbitan and an oleic acid (for example, polyoxyethylene sorbitan monooleate). However, the types of component (c) that can be used herein, are not limited thereto.

The component (c) improves processability during the manufacturing process of filters for a smoking article: suppression of the generation of static electricity in lyocell staples; and prevention of cutting due to the generation of static electricity. Specifically, moisture is adsorbed onto the surface of the fiber by alkylene oxide-derived units, which leads to suppression of the generation of static electricity. In addition, component (c) acts to help the oil disperse effectively in water.

The amount of component (c) may be adjusted considering the function of component (c) and the function of the oil as described above.

In an embodiment, the oil may include 10 parts by weight to 50 parts by weight of (c) the alkylene oxide adduct with respect to the esterification product (b), based on 100 parts by weight of (a) an esterification product of a fatty acid having at least 16 carbon atoms and an aliphatic monohydric alcohol.

In some embodiments, the oil of the present application may include at least 15 parts by weight, at least 20 parts by weight, at least 25 parts by weight, at least 30 parts by weight, at least 35 parts by weight, at least 40 parts by weight, or at least 45 parts by weight of component (c), based on 100 parts by weight of component (a). The upper limit of the amount of component (c) based on 100 parts by weight of component (a), may be, for example, 45 parts by weight or less, 40 parts by weight or less, 35 parts by weight or less, 30 parts by weight or less, 25 parts by weight or less, 20 parts by weight or less, or 15 parts by weight or less.

In an embodiment, the oil may include (b) an esterification product of sorbitan and a fatty acid having at least 16 carbon atoms in excess with respect to (c) an alkylene oxide adduct with respect to the esterification product (b).

In an embodiment, the oil may include (a) 40 wt% to 80 wt% of an esterification product of a fatty acid having at least 16 carbon atoms and an aliphatic monohydric alcohol, based on 100 wt% of the total weight of the oil. In some embodiments, based on 100 wt% of the total weight of the oil, the amount of component (a) may be at least 45 wt%, at least 50 wt%, at least 55 wt%, at least 60 wt%, at least 65 wt%, at least 70 wt%, or at least 75 wt%. The upper limit of the amount of component (a) may be, for example, 75 wt% or less, 70 wt% or less, 65 wt% or less, 60 wt% or less, 55 wt% or less, 50 wt% or less, or 45 wt% or less.

In an embodiment, the oil may include component (a) in the largest excess amount among components (a) to (c).

In an embodiment, the oil may include 15 wt% to 55 wt% of (b) an esterification product of sorbitan and a fatty acid having at least 16 carbon atoms, based on 100 wt% of the total weight of the oil. In some embodiments, based on 100 wt% of the total weight of the oil, the amount of component (b) may be at least 20 wt%, at least 25 wt%, at least 30 wt%, at least 35 wt%, at least 40 wt%, at least 45 wt%, or at least 50 wt%. The upper limit of the amount of component (b) may be, for example, 50 wt% or less, 45 wt% or less, 40 wt% or less, 35 wt% or less, 30 wt% or less, or 25 wt% or less.

In an embodiment, the oil may include 10 wt% to 30 wt% of component (c), that is, an alkylene oxide adduct with respect to the component (b), based on 100 wt% of the total weight of the oil. In some embodiments, based on 100 wt% of the total weight of the oil, the amount of component (c) may be at least 15 wt%, at least 20 wt%, or at least 25 wt%. The upper limit of the amount of component (c) may be, for example, 25 wt% or less, 20 wt% or less, or 15 wt% or less.

In an embodiment, the oil may include, based on 100 wt% of the total weight of the oil, (b) an esterification product of sorbitan and a fatty acid having at least 16 carbon atoms; and (c) an alkylene oxide adduct with respect to the component (b) in an amount of at least 15 wt%. In some embodiments, based on 100 wt% of the total weight of the oil, the sum of the amount of component (b) and the amount of component (c) may be at least 20 wt%, at least 25 wt%, at least 30 wt%, at least 35 wt%, at least 40 wt%, at least 45 wt%, or at least 50 wt%. The upper limit of the the sum of the amount of component (b) and the amount of component (c) may be, for example, 55 wt% or less, 50 wt% or less, 45 wt% or less, 40 wt% or less, 35 wt% or less, 30 wt% or less, or 25 wt% or less.

In an embodiment, the oil may further include (d) water. As described later, water used in small amounts helps emulsification.

The amount of water is not particularly limited, but may be the remaining amount excluding the total amount of components (a) to (c) based on 100 wt% of the total weight of the oil. The amount of water in the oil (i.e., the remaining amount excluding the total amount of the remaining components excluding water) may be, for example, 10 wt% or less, 9 wt% or less, 8 wt% or less, 7 wt% or less, 6% by weight. Hereinafter, it may be 5 wt% or less, 4 wt% or less, 3 wt% or less, 2 wt% or less, or 1 wt% or less. The lower limit of water in the oil may be, for example, at least 0.1 wt%, at least 0.5 wt%, or at least 1 wt%.

The lyocell material of the present application may be a crimped tow with a fineness appropriate for manufacturing a filter for a smoking article and ensuring the function thereof. For example, the total fineness of the tow is a factor related to the amount of filament that can be introduced into the filter wrapper. When the total fineness is too low, a sufficient amount of filament may not be filled into the filter wrapper, which lowers the draw resistance properties. When the total fineness is too high, the amount of filling in the filter wrapper becomes too large, causing the filter wrapper to burst, or difficulties to control the amount of tow filling to achieve the draw resistance required for the filter.

In an embodiment, the single fineness of filaments constituting the lyocell multifilament may be 1.5 denier to 8.0 denier. In this regard, the single fineness of the filament refers to the fineness of a single monofilament separated from the multifilament.

Specifically, the single fineness of the filament may be, for example 7.5 denier or less, 7.0 denier or less, 6.5 denier or less, 6.0 denier or less, 5.5 denier or less, 5.0 denier or less, 4.5 denier or less, 3.5 denier or less, or 3.0 denier or less. The lower limit of the single fineness of the filament may be, for example, at least 2.0 denier, at least 2.5 denier, at least 3.0 denier, at least 3.5 denier, at least 4.0 denier, at least 4.5 denier, at least 5.0 denier, at least 5.5 denier, or at least 6.0 denier. Within these ranges, stable physical properties (for example, hardness or draw resistance implementation, etc.) and processability of filters for a smoking article may be obtained.

In an embodiment, the lyocell multifilament to which the crimp is applied may be a crimped tow with a total fineness of 15,000 denier to 45,000 denier. In an embodiment, the lower limit of the total fineness may be, for example, at least 16,000, at least 16,500, at least 17,000, at least 17,500, at least 18,000, at least 18,500, at least 19,000, at least 19,500, at least 20,000, at least 20,500, at least 21,000, at least 21,500, at least 22,000, at least 22,500, at least 23,000, at least 23,500, at least 24,000, at least 24,500, at least 25,000, at least 25,500, at least 26,000, at least 26,500, at least 27,000, at least 27,500, at least 28,000, at least 28,500, at least 29,000, at least 29,500, at least 30,000, at least 30,500, at least 31,000, at least 31,500, at least 32,000, at least 32,500, at least 33,000, at least 33,500, at least 34,000, at least 34,500, at least 35,000, at least 35,500, at least 36,000, at least 36,500, at least 37,000, at least 37,500, at least 38,000, at least 38,500, at least 39,000, at least 39,500, at least 40,000, at least 40,500, at least 41,000, at least 41,500, at least 42,000, at least 42,500, at least 43,000, at least 43,500, or at least 44,000. In an embodiment, the upper limit of the total fineness may be, for example, 44,500 or less, 44,000 or less, 43,500 or less, 43,000 or less, 42,500 or less, 42,000 or less, 41,500 or less, 41,000 or less, 40,500 or less, 40,000 or less, 39,500 or less, 39,000 or less, 38,500 or less, 38,000 or less, 37,500 or less, 37,000 or less, 36,500 or less, 36,000 or less, 35,500 or less, 35,000 or less, 34,500 or less, 34,000 or less, 33,500 or less, 33,000 or less, 32,500 or less, 32,000 or less, 31,500 or less, 31,000 or less, 30,500 or less, 30,000 or less, 29,500 or less, 29,000 or less, 28,500 or less, 28,000 or less, 27,500 or less, 27,000 or less, 26,500 or less, 26,000 or less, 25,500 or less, 25,000 or less, 24,500 or less, 24,000 or less, 23,500 or less, 23,000 or less, 22,500 or less, 22,000 or less, 21,500 or less, 21,000 or less, 20,500 or less, 20,000 or less, 19,500 or less, 19,000 or less, 18,500 or less, 18,000 or less, 17,500 or less, 17,000 or less, 16,500 or less, 16,000 or less, or 15,500 or less. When the total fineness of the tow is outside these ranges, the processability of manufacturing filters for a smoking article is not good (continuous process by cutting is impossible), and the amount of tow filled into the filter wrapper when manufacturing filters for a smoking article is too small or too large, and thus, it is difficult to obtain sufficient filter properties (for example, hardness or draw resistance).

The method of measuring the level of fineness is not particularly limited, but for example, the tow to be measured is collected as a 2 m sample and left in a room with a constant temperature and humidity at a temperature of 20°C and a humidity of 65% for 24 hours and is stabilized. One end of the stabilized tow is fixed, and a weight of 2 kg is attached to the other end thereof. The tow in the stretched state due to the load is maintained (stabilized) for 5 seconds, then cut into 90 cm to obtain a sample, and the weight of the sample is measured (total fineness). The fineness is calculated according to the denier conversion method: the measured weight $\times$ 10000. The single fineness is calculated by dividing the total fineness by the number of strands in the filament.

The total fineness of the tow as described above may be determined depending on the single fineness of the filament and the number of crimps. Regarding the method of the present application, since the single fineness and the number of crimps are controlled as described above, the total fineness of the tow, suitable for manufacturing filters for a smoking article and ensuring the function thereof, may be obtained.

In an embodiment, the crimped lyocell multifilament may have 7,87-19,67 crimps per centimetre (20 to 50 crimps per inch) For example, the number of crimps may be at least 9,84 ea/cm (25 ea/inch) at least 11,81 ea/cm (30 ea/inch) at least 13,78 ea/cm (35 ea/inch) at least 15,75 ea/cm (40 ea/inch) or at least 17,72 ea/cm (45 ea/inch) and the upper limit thereof may be, for example, 17,72 ea/cm (45 ea/inch) or less 15,55 ea/cm (40 ea/inch) or less, 13,78 ea/cm (35 ea/inch) or less, 11,81 ea/cm (30 ea/inch) or less, 9,84 ea/cm (25 ea/inch) or less. The number of crimps and uniformity thereof may be controlled according to pressure and temperature conditions related to the crimping operation, which will be described later.

Although not particularly limited, the number of crimps may be measured according to the KS K 0326 standard, for example. Specifically, a 20-strand tow sample with intact crimp is prepared, and a previously prepared piece of polished paper (space distance 25 mm) is attached thereto using celluloid 4% to 5% amyl acetate adhesive in such a manner that each strand of single fiber is stretched by 25 $\pm$ 5%, and then left untouched to dry the adhesive. In addition, with respect to this sample, a crimp tester was used to apply an initial load equivalent to 1.96/1000 cN (=2 mgf) per 1 De for each strand, and the number of crimps between 25 mm is calculated. In this regard, the number of crimps may be expressed as the upper and lower limits of the number of crimps measured for 20 strands. Alternatively, the number of crimps may be expressed as the arithmetic average of the number of crimps measured for 20 strands.

Although not particularly limited, the lyocell material prepared as above may be used in filters for a smoking article.

In an embodiment, the lyocell material may further include a binder. The binder may be present, for example, on the surface of the crimped lyocell multifilament or between crimped lyocell multifilaments (or monofilaments). The binder may increase the hardness of filters for a smoking article made of tow, preventing filters from being caught when filters are manufactured or smoking articles (for example, cigarettes) are manufactured.

The type of binder that can be used herein is not particularly limited, and any known binder may be used as long as it does not impair the purpose of the present disclosure. For example, a binder that provides sufficient compatibility with an oil used in the present application, improves the hardness of the filter, and provides excellent binding force, may be used.

In an embodiment, the binder may include a polyester-based binder, a cellulose-based binder, and/or a vinyl-based binder.

Although not particularly limited, a polyester binder including at least one selected from the group consisting of alkylene, arylene, and heteroarylene, each having 5 to 12 carbon atoms, may be used.

Cellulose-based binders include, for example, hydroxypropylmethylcellulose (HPMC), ethylcellulose (EC) and/or methylcellulose (MC), carboxymethylcellulose (CMC), etc., but are not limited thereto.

Vinyl binders include, for example, polyvinylpyrrolidone (PVP), polyvinyl alcohol (PVA), and/or ethylene vinyl acetate (EVAc), but are not limited thereto.

The method of applying (coating) the binder to the lyocell material will be described later.

In an embodiment, the lyocell material may be a lyocell material (crimped tow) with a sinking time in water of at least 6.0 seconds. In this regard, the sinking time refers to the time for the lyocell material to fall to the bottom of a container filled with water after the lyocell material is added to the container (for example, a beaker) (for specific measurement methods, refer to the examples described below).

In an embodiment of the present application, the length of the tow used when measuring the sinking time (for example, the length of the longest dimension of the shape of the tow) may be, for example, 10 cm or less, 9 cm or less, 8 cm or less, 7 cm or less, 6 cm or less, or 5 cm or less, and the lower limit thereof may be at least 1 cm, at least 2 cm, at least 3 cm, at least 4 cm, or at least 5 cm. In this regard, there may be an error in the cutting size (length) within $\pm$ 1 cm, within $\pm$ 0.5 cm, or within $\pm$ 0.1 cm.

In an embodiment of the present application, with respect to measuring the sinking time, the height of water filled in the container may be 12 cm to 13 cm or about 12.5 cm. In this regard, there may be an error in the height within $\pm$ 1 cm, within $\pm$ 0.5 cm, or within $\pm$ 0.1 cm.

The shorter the sinking time in water, the greater the hydrophilicity of the material, and the longer the sinking time in water, the greater the hydrophobicity of the material. As in the experiments described later, in the present application, by using a predetermined amount of an oil including predetermined components, a relatively long sinking time may be given to the lyocell material. In other words, the lyocell material of the present application may have a hydrophobic surface through oil coating.

The sinking time may be adjusted depending on the amount (% by weight) of an oil in a material. For example, the sinking time may be at least 6.5 seconds, at least 7.0 seconds, at least 7.5 seconds, at least 8.0 seconds, at least 8.5 seconds, at least 9.0 seconds, at least 9.5 seconds, or at least 10 seconds, and 15 seconds or less, 14 seconds or less, 13 seconds or less, 12 seconds or less, 11 seconds or less, or 10 seconds or less.

As described later, these sinking time characteristics may also be expressed as a sedimentation speed (cm/sec) depending on the time and water level described above.

Another embodiment of the present application provides a lyocell material having hydrophobic properties. For example, the lyocell material may exhibit certain sinking characteristics in water.

Herein disclosed is (not according to the invention) a lyocell material may be a lyocell material (crimped tow) with a sinking time in water of at least 6.0 seconds. In this regard, the sinking time refers to the time for the lyocell material to fall to the bottom of a container filled with water after the lyocell material is added to the container (for example, a beaker) (for specific measurement methods, refer to the examples described below).

The length of the tow used when measuring the sinking time (for example, the length of the longest dimension of the shape of the tow) may be, for example, 10 cm or less, 9 cm or less, 8 cm or less, 7 cm or less, 6 cm or less, or 5 cm or less, and the lower limit thereof may be at least 1 cm, at least 2 cm, at least 3 cm, at least 4 cm, or at least 5 cm. In this regard, there may be an error within $\pm$ 1 cm, $\pm$ 0.5 cm, or $\pm$ 0.1 cm in the cutting size (length).

With respect to measuring the sinking time, the height of water filled in the container may be 12 cm to 13 cm or about 12.5 cm. In this regard, there may be an error in the height within $\pm$ 1 cm, within $\pm$ 0.5 cm, or within $\pm$ 0.1 cm.

The shorter the sinking time in water, the greater the hydrophilicity of the material, and the longer the sinking time in water, the greater the hydrophobicity of the material. As in the experiments described later, in the present application, by using the oil described above, a relatively long sinking time may be given to the lyocell material. In other words, the lyocell material of the present application may have a hydrophobic surface through oil coating.

The sinking time may be adjusted depending on the amount (% by weight) of an oil in a material. For example, the sinking time may be at least 6.5 seconds, at least 7.0 seconds, at least 7.5 seconds, at least 8.0 seconds, at least 8.5 seconds, at least 9.0 seconds, at least 9.5 seconds, or at least 10 seconds, and 15 seconds or less, 14 seconds or less, 13 seconds or less, 12 seconds or less, 11 seconds or less, or 10 seconds or less.

The sedimentation characteristics may also be expressed as a sedimentation speed. For example, the lyocell material of the present application may have a sedimentation speed in water of 2.1 cm/sec or less. Specific examples of these speeds may be calculated according to the time and water level described above.

In an embodiment, the lyocell material includes: a lyocell multifilament to which a crimp is applied; and an oil applied on the lyocell multifilament. The descriptions of the lyocell filament, the oil, and the material including the same are the same as described above, and thus, will be omitted

Although there is no particular limitation, the lyocell material showing the sedimentation characteristics as described above may be used in filters for a smoking article.

An embodiment of the present application relates to a method of manufacturing a lyocell material. By using this method, the lyocell material for a filter for a smoking article may be manufactured.

The lyocell material to which the hydrophobic oil is applied, may delay the instantaneous absorption of moisture when manufactured as a filter for a smoking article. In addition, because the oil of the present application is highly compatible with the binder, physical properties (for example, hardness or suction resistance, etc.) required for various smoking articles (for example, cigarettes) may be embodied.

Specifically, the method of manufacturing the lyocell material includes treating a lyocell multifilament with an oil and applying a crimp on the lyocell multifilament. The oil includes at least (a) an esterification product of a fatty acid having at least 16 carbon atoms and an aliphatic monohydric alcohol; and (b) an esterification product of sorbitan and a fatty acid having at least 16 carbon atoms.

The oil treatment may be performed by, for example, spraying an oil of the composition described above onto a lyocell filament or immersing a lyocell filament in an oil. The method of the present application, which includes the oil treatment, may be performed such that the amount of the oil (for example, OPU (wt%)) in the lyocell material satisfies the predetermined ranges described later.

Additionally, the applying of a crimp may be performed by, for example, applying steam and/or pressure to the lyocell multifilament.

The description of the oil components is the same as described above. Thus, corresponding description will be omitted.

The method for manufacturing a lyocell material according to the embodiment of the present application, including the oil treatment process and the crimp application operation, will be described in more detail below. The method of the present application may be performed including one or more of the processes described below.

Lyocell dope spinning process(a)

This process is a process of spinning a lyocell spinning dope including lyocell cellulose (or cellulose pulp) and N-methylmorpholine-noxide (NMMO).

Commercially available cellulose acetate filters are pointed out as the main cause of microplastics. However, since the amine oxide-based solvent used in the production of lyocell fibers is recyclable and biodegradable even when disposed of, lyocell materials do not generate any pollutants during the production process. Furthermore, lyocell tow is biodegradable and may be removed within a relatively short period of time, making lyocell a more environmentally friendly material than cellulose acetate.

In an embodiment, the amount of cellulose in the spinning dope may be 5 wt% to 15 wt% based on 100 wt% of the total weight of the dope. When the amount of cellulose is too small, it is difficult to implement the characteristics of a lyocell fiber, and when the amount exceeds the range, it is difficult to dissolve in a solvent. In consideration of this, the amount of cellulose in the spinning dope may be at least 6 wt%, at least 7 wt%, at least 8 wt%, at least 9 wt%, or at least 10 wt%, and the upper limit thereof may be, for example, 14 wt% or less, 13 wt% or less, 12 wt% or less, 11 wt% or less, 10 wt% or less, or 9 wt% or less.

In an embodiment, the spinning dope may include an aqueous solution of N-methylmorpholine-N-oxide (NMMO). The aqueous solution may include, for example, 80 to 95 weight percent of N-methylmorpholine-N-oxide and 5 to 20 weight percent of water, considering the degree of dissolution of cellulose and process temperature.

In an embodiment, the cellulose or cellulose pulp may have an alpha-cellulose amount of 85 wt% to 97 wt%, based on 100 wt% of total cellulose.

Additionally, in an embodiment of the present application, the degree of polymerization (DPw) of the cellulose may be 600 to 1700.

In the spinning process, the shape of the spinneret for discharging the spinning dope is not particularly limited. For example, a donut-shaped spinneret may be used.

The nozzle temperature of the spinneret, for example, the spinning temperature thereof, may be appropriately selected by a person skilled in the art. Considering that the viscosity of the spinning dope varies depending on the spinning temperature and discharging may not be performed well, the spinning temperature may be, for example, 100 °C to 120 °C, or 100 °C to 110 °C.

In an embodiment, the process of spinning the spinning dope may be performed under controlled spinning conditions such that the single fineness of the filament may be 1.5 denier to 8.0 denier. For example, one or more spinning conditions among the discharge amount and spinning speed of the spinning dope may be appropriately controlled so that the single fineness of the filament constituting the lyocell material satisfies 1.5 denier to 8.0 denier. In this regard, the single fineness of the filament refers to the fineness of a single monofilament separated from the multifilament.

Specifically, the single fineness of the filament may be, for example, 7.5 denier or less, 7.0 denier or less, 6.5 denier or less, 6.0 denier or less, 5.5 denier or less, 5.0 denier or less, or 4.5 denier or less. The lower limit of the single fineness of the filament may be, for example, at least 2.0 denier, at least 2.5 denier, at least 3.0 denier, at least 3.5 denier, at least 4.0 denier, at least 4.5 denier, at least 5.0 denier, at least 5.5 denier, or at least 6.0 denier. Within these ranges, stable draw resistance implementation and processability of filters for a smoking article may be obtained.

The spinning dope discharged through the spinneret may undergo a coagulation process described later.

Coagulation and obtaining multifilament (b)

In this operation, the spun lyocell spinning dope is coagulated, and lyocell multifilaments may be obtained.

For the coagulation, a method in which the spinning dope comes into contact with air and/or a coagulating liquid may be used.

In an embodiment, the coagulation includes: a first coagulation process of supplying cooling air to the spun lyocell dope; and a second coagulation process of coagulating the first coagulated spinning dope by adding the same to a coagulating liquid.

According to the coagulation method, the lyocell dope discharged from the spinneret may be first coagulated in the space (air gap section) between the spinneret and a coagulation tank. For example, cooling air may be supplied to this air gap section from an air cooling part located inside the spinneret, in the direction from the center of the spinneret to the periphery thereof. In addition, first coagulation may be achieved by an air quenching method or members known in the related field.

In an embodiment, the upper limit of the temperature of the cooling air used for first coagulation may be, for example, 15°C or lower. In some embodiments, the cooling air may be air with a temperature of 14°C or lower, 13°C or lower, 12°C or lower, 11°C or lower, or 10°C or lower. When the temperature exceeds these limits of the temperature, the spinning dope coagulation may not be sufficient and spinning-related processability is not good.

The lower limit of the cooling air may be determined in consideration of spinning processability and/or cross-sectional uniformity of the filament. For example, when the temperature of the cooling air is less than 4°C, the surface of the spinneret cools, the surface of the filament becomes uneven, and spinning processability also deteriorates. In this aspect, the cooling air may have the temperature of at least 5°C, at least 6°C, at least 7°C, at least 8°C, or at least 9°C..

The degree to which the cooling air is supplied, may be adjusted in consideration of sufficient coagulation, spinning processability, and the effect of the filament on physical properties. For example, the supply may be made to the spinning dope introduced at an air flow rate of 70 $Nm^3$/h to 300 $Nm^3$/h. In some embodiments, the air flow rate may be at least 100 $Nm^3$/h or at least 150 $Nm^3$/h, and the upper limit of the air flow rate may be, for example, 250 $Nm^3$/h or less or 200 $Nm^3$/h or less.

After the first coagulation as described above, the cooled spinning dope may be supplied to a coagulation tank or bath including the coagulating liquid (second coagulation). For proper coagulation, the temperature of the coagulating liquid may be, for example, 30°C or lower or 25°C or lower. In some embodiments, the temperature of the coagulating liquid may be at least 10°C, at least 15°C, or at least 20°C. When these temperatures are maintained, the coagulation rate may be appropriately maintained.

The type of coagulating liquid for second coagulation as described above is not particularly limited. For example, the coagulating liquid may include one or more of water and N-methylmorpholine-N-oxide (NMMO).

Although not particularly limited, when the coagulating liquid includes water and NMMO, the water content in the coagulating liquid may be 60 wt% to 90 wt%, and the NMMO content may be 10 wt% to 40 wt%. Alternatively, the coagulating liquid may include 70 wt% to 80 wt% of water and 20 wt% to 30 wt% of NMMO. The concentration of this coagulating liquid may be controlled to be maintained during the manufacturing process using a sensor or the like.

Washing process(c)

If necessary, the multifilament may be washed after the coagulation and multifilament processes described above. Due to the washing, NMMO and/or other impurities remaining in the filament may be removed.

The method of performing washing is not particularly limited. For example, washing may be performed by introducing coagulated lyocell multifilaments into a washing tank using a towing roller. Alternatively, the washing liquid may be sprayed while moving to the next process by a towing roller.

Components of the washing liquid are not particularly limited. For example, the washing liquid may include water, and may further include known other additives.

Additionally, in consideration of reuse after washing, the washing liquid may be used by adjusting the temperature to 100°C or lower.

<u>Oil treatment process (d)</u>

This process is a process of applying an oil having the components described above to the surface of the filament. Due to the oil treatment, friction applied to the filament is reduced, and a crimp may be well formed in the crimp application process described later. As described later, when the oil treatment is performed two or more times, the oil treatment may be referred to as a first oil treatment and a second oil treatment depending on the process order.

Although there is no particular limitation, the oil treatment may be performed by immersing the multifilament in a bath filled with an oil so that the multifilament is completely submerged in the oil. Alternatively, the oil treatment may be performed by spraying an oil solution while moving to the next process by a towing roller.

In order to ensure that the amount of oil applied to the multifilament is constant after the oil treatment as described above, a roll located before and/or after the oil treatment process may be additionally used to squeeze out the oil on the surface of the multifilament.

In an embodiment, the oil treatment may be performed such that the oil amount (OPU: oil pick up ratio (wt%)) satisfies at least 2.0 wt%, based on 100 wt% of the multifilament that is treated with at least an oil. The multifilament that is treated with at least an oil may be, for example, a lyocell multifilament to which a first oil treatment (described below) is applied, a lyocell multifilament to which a first oil treatment and a second oil treatment (described below) are applied, or a lyocell multifilament to which a binder, which will be described later, as well as the oil treatment described above are applied. In addition, the lyocell multifilament treated with oil and/or a binder as described above may be a lyocell multifilament to which a crimp is applied.

Specifically, the amount of the oil in the multifilament that is treated with at least an oil may be at least 2.5 wt%, at least 3.0 wt%, at least 3.5 wt%, at least 4.0 wt%, at least 4.5 wt%, at least 5.0 wt%, at least 5.5 wt%, at least 6.0 wt%, at least 6.5 wt%, at least 7.0 wt%, at least 7.5 wt%, at least 8.0 wt%, at least 8.5 wt%, at least 9.0 wt%, or at least 9.5 wt%. The upper limit thereof may be, for example, 15.0 wt% or less, 14.5 wt% or less, 14.0 wt% or less, 13.5 wt% or less, 13.0 wt% or less, 12.5 wt% or less, 12.0 wt% or less, 11.5 wt% or less, 11.0 wt% or less, 10.5 wt% or less, 10 wt% or less, 9.5 wt% or less, 9.0 wt% or less, 8.5 wt% or less, 8.0 wt% or less, 7.5 wt% or less, 7.0 wt% or less, 6.5 wt% or less, 6.0 wt% or less, 5.5 wt% or less, 5.0 wt% or less, 4.5 wt% or less, 4.0 wt% or less, or 3.5 wt% or less. In this regard, the amount may refer to the dry weight after the solvent (for example, water) or liquid component, which may be included in the oil, evaporates.

When the oil of the composition described above is processed within these amount ranges, the hydrophilic characteristics of the lyocell material may be compensated for, and, as described later, excessive reduction in hardness of the lyocell filter due to the permeation of moisture or saliva may be suppressed.

In some cases, the oil may be dried after the oil treatment described above.

In an embodiment of the present application, one or more of the processes described above may be controlled such that the single fineness of the filaments constituting the lyocell multifilament may be 1.5 denier to 8.0 denier. The single fineness of the filament refers to the fineness of a single monofilament separated from the multifilament.

Specifically, the single fineness of the filament may be, for example, 7.5 denier or less, 7.0 denier or less, 6.5 denier or less, 6.0 denier or less, 5.5 denier or less, 5.0 denier or less, or 4.5 denier or less. The lower limit of the single fineness of the filament may be, for example, at least 2.0 denier, at least 2.5 denier, at least 3.0 denier, at least 3.5 denier, at least 4.0 denier, at least 4.5 denier, at least 5.0 denier, at least 5.5 denier, or at least 6.0 denier. Within these ranges, stable draw resistance implementation and processability of filters for a smoking article may be obtained.

Although not particularly limited, the process controlled to ensure the fineness range may be the spinning process. Alternatively, all of the spinning, coagulation, washing, and oil treatment processes may be controlled to ensure the single fineness range.

<u>Crimp application process (e)</u>

The crimp application process is a process of applying pressure by steam and/or a roller to the oil-treated lyocell multifilament so as to obtain a crimped tow, and may be referred to as crimping.

Crimping gives waves to the multifilament and allows the fiber to have bulky characteristics. Crimping may be performed using known crimping devices, such as a stuffer box and/or a steam box, and available crimping devices may be any device that can provide steam pressure or roll pressure, for example.

In an embodiment, the applying a crimp may be performed by supplying steam to the lyocell multifilament to preheat and swell the multifilament, and then pressing the multifilament with a press roller to form a wrinkle in the multifilament. In this regard, a steam box may be used to supply steam, and this steam box may be located in front of a crimp device.

In an embodiment, the applying a crimp may be performed in a manner in which a multifilament is pressed and provided with steam by a press roller.

In an embodiment, the applying a crimp may be performed by supplying steam to the lyocell multifilament to preheat and swell the multifilament, and then pressurizing the multifilament simultaneously with the steam supply by a press roller.

In an embodiment, the applying a crimp may be performed while applying 0.1 kgf/cm$^2$ to 2.0 kgf/cm$^2$ of steam to the multifilament before placing in the crimp device (for example, a press roller). In embodiments of the present application, the steam may be provided, by a steam box, in an amount of 0.2 kgf/cm$^2$, at least 0.3 kgf/cm$^2$, at least 0.4 kgf/cm$^2$, at least 0.5 kgf/cm$^2$, or at least 0.6 kgf/cm$^2$. Additionally, the steam may be provided in an amount of 1.5 kgf/cm$^2$ or less, 1.4 kgf/cm$^2$ or less, 1.3 kgf/cm$^2$ or less, 1.2 kgf/cm$^2$ or less, 1.1 kgf/cm$^2$ or less, or 1.0 kgf/cm$^2$ or less. When the amount or pressure of the steam provided is below these ranges, the crimp may not be formed smoothly. In addition, when the amount exceeds the upper limits, the flexibility of the filament is increased and excessive crimp is applied to the filament within the crimp device, and the filament may not pass through the crimp device.

In an embodiment, the applying a crimp may be performed while applying a pressure of 1.5 kgf/cm$^2$ to 4.0 kgf/cm$^2$ to the multifilament introduced into the crimp device using a roller. In embodiments of the present application, the pressure of at least 1.6 kgf/cm$^2$, at least 1.7 kgf/cm$^2$, at least 1.8 kgf/cm$^2$, at least 1.9 kgf/cm$^2$, at least 2.0 kgf/cm$^2$, at least 2.1 kgf/cm$^2$, at least 2.2 kgf/cm$^2$, at least 2.3 kgf/cm$^2$, at least 2.4 kgf/cm$^2$, or at least 2.5 kgf/cm$^2$ may be applied to the multifilament through a press roller. In some embodiments, the pressure of 3.9 kgf/cm$^2$ or less, 3.8 kgf/cm$^2$ or less, 3.7 kgf/cm$^2$ or less, 3.6 kgf/cm$^2$ or less, 3.5 kgf/cm$^2$ or less, 3.4 kgf/cm$^2$ or less, 3.3 kgf/cm$^2$ or less, 3.2 kgf/cm$^2$ or less, 3.1 kgf/cm$^2$ or less, 3.0 kgf/cm$^2$ or less, 2.9 kgf/cm$^2$ or less, 2.8 kgf/cm$^2$ or less, 2.7 kgf/cm$^2$ or less, 2.6 kgf/cm$^2$ or less, or 2.5 kgf/cm$^2$ or less may be applied. When the pressure of the roller is lower than the lower limits, the number of crimps may not be sufficiently formed. Additionally, when the roller pressure exceeds these ranges, the pressing force may be so strong that the filament may not be smoothly introduced into the crimp device or may not pass through the stuffer box. By the press roller that provides the pressure, wrinkles may be formed in the multifilament.

In an embodiment, in the applying a crimp, doctor blade that applies a predetermined pressure to the multifilament may be applied. The doctor blade controls the residence time of the filament inserted into a crimper stuffer box, contributing to the number of crimps (which affects the quality of the tow and filter performance). For example, such a doctor blade may be located in the movement path of the multifilament that is pressed by the roller and then discharged from the roller pressing point.

In an embodiment of the present application, the applying a crimp may be performed by applying, by using a doctor blade, a pressure of 0.1 kgf/cm$^2$ to 2.0 kgf/cm$^2$ to the multifilament that has passed through the roller of the crimp device. In some embodiments, the pressure applied by the doctor blade may be at least 0.2 kgf/cm$^2$, at least 0.3 kgf/cm$^2$, at least 0.4 kgf/cm$^2$, or at least 0.5 kgf/cm$^2$. In some embodiments, the upper limit of the pressure may be, for example, 1.5 kgf/cm$^2$ or less, 1.4 kgf/cm$^2$ or less, 1.3 kgf/cm$^2$ or less, 1.2 kgf/cm$^2$ or less, 1.1 kgf/cm$^2$ or less, or 1.0 kgf/cm$^2$ or less.

In an embodiment, the applying a crimp may be performed at a temperature of 120 °C to 250 °C. When the temperature is too low, the crimp shape stabilization effect may not be good, and when the temperature is too high, the concentration of fat in the stuffer box may be increased, making the crimp formation difficult. Therefore, considering these ranges of steam pressure, etc., the temperature may be appropriately controlled to be at least 130 °C, at least 140 °C, or at least 150 °C, and at least 200 °C, at least 180 °C, or at least 160 °C.

Binder treatment process (f)

In an embodiment, the method may further include coating, with a binder, a lyocell multifilament that is treated with an oil, or a lyocell multifilament (that is, crimped tow) obtained by applying a crimp.

In the case where a filter for a smoking article is manufactured using tow, a binder may be used. The binder may increase the hardness of filters for a smoking article made of tow, preventing filters from being caught when filters are manufactured or cigarettes are manufactured.

The method of coating the lyocell crimped tow with a binder is not particularly limited. For example, the oil treatment may be performed by immersing the crimped tow in a bath filled with a binder (or a binder solution) so that the multifilament is completely submerged in the binder. Alternatively, the binder coating may be performed by spraying (or applying) the binder (or a binder solution) using a nozzle.

The type or component of the binder that can be used herein, is the same as described above. Accordingly, description thereof will be omitted.

In an embodiment, the binder (or binder solution) may further include a solvent in addition to the components described above. The solvent may include, for example, water, ethanol, propylene glycol, and/or glycerin, but are not limited thereto. When the binder (or the binder solution) includes a solvent, the amount of the solvent may be, for example, about 20 wt% to about 80 wt% or about 40 wt% to about 60 wt%, based on 100 wt% of the total weight of the binder (or the binder solution).

The binder treatment may be performed at such a level that the purpose of the binder processing described above is achieved. For example, the binder treatment may be performed such that the amount of the binder is 20 wt% or less, for example, 8 wt% to 15 wt%, based on 100 wt% of the multifilament that is treated with an oil and a binder. In this regard, the amount may refer to the dry weight after the solvent or liquid component, which may be included in the binder, evaporates.

After the binder is applied on the crimped tow, drying of the binder may proceed. The drying temperature is not particularly limited, and, for example, drying may be performed at room temperature (about 10 °C to about 35 °C).

Other processes (g)

Appropriate post-processing may be additionally performed after applying the crimp.

In an embodiment, a second oil treatment (g1) may be performed additionally. The second oil treatment may prevent static electricity from occurring in the tow and provide flexibility to the tow. The second oil treatment may be performed in the same manner as or in accordance with the oil treatment (d) described above.

Specifically, the second oil treatment may be performed by applying an oil to the lyocell tow that has undergone a process using a crimper. This may function advantageously in several processes carried out in the manufacture of a filter for a smoking article. For example, the second oil treatment not only allows the fibers and filters to spread well in air during the spreading process, but also prevents the fibers from being cut by the chains of the oil holding the lyocell during the stretching process. To this end, there is a need to use a component derived from a fatty acid having at least a predetermined number of carbon atoms, as described above.

The second oil treatment as described above may be performed before or after the treatment of the binder. In some embodiments, the second oil treatment may be performed regardless of the presence or absence of the treatment of the binder.

Even when the second oil treatment as described above is performed, the second oil treatment may be performed while the amount or OPU amount of the oil in the material satisfies those ranges described above.

In an embodiment, a drying treatment (g2) may be additionally performed. The drying may be performed at a temperature of 100 °C to 130 °C, for example. The drying treatment method or method is not particularly limited, and may be performed by known techniques. For example, hot air may be provided to tow, or tow may be allowed to pass through or to be left for a certain period of time in a temperature-controlled room.

According to an embodiment of the present application, due to the method including the applying a crimp as described above, tow having 7,87-19,67 crimps per centimetre (20 to 50 crimps per inch) may be provided. For example, the number of crimps may be at least 9,84 ea/cm (25 ea/inch) at least 11,81 ea/cm (30 ea/inch) at least 13,78 ea/cm (35 ea/inch) at least 15,75 ea/cm (40 ea/inch) or at least 17,72 ea/cm (45 ea/inch) and the upper limit thereof may be, for example, 17,72 ea/cm (45 ea/inch) or less 15,55 ea/cm (40 ea/inch) or less, 13,78 ea/cm (35 ea/inch) or less, 11,81 ea/cm (30 ea/inch) or less, 9,84 ea/cm (25 ea/inch) or less. The number of crimps and the uniformity thereof may be controlled through the pressure and temperature conditions related to the crimping process described above.

The manufacturing method of the present application may provide tow with a fineness appropriate for manufacturing a filter for a smoking article and ensuring the function thereof. The total fineness of the tow is a factor related to the amount of filament that can be introduced into the filter wrapper. When the total fineness is too low, a sufficient amount of filament may not be filled into the filter wrapper, which lowers the suction resistance properties. When the total fineness is too high, the amount of filling in the filter wrapper becomes too large, causing the filter wrapper to burst, or difficulties to control the amount of tow filling to achieve the suction resistance required for the filter. In this regard, according to embodiments of the present application, crimped tow having a total fineness of 15,000 denier to 45,000 denier may be provided. For example, the lower limit of the total fineness may be, for example, at least 16,000, at least 17,000, at least 18,000, at least 19,000, or at least 20,000, and the upper limit thereof may be, for example, 40,000 or less, 35,000 or less, 30,000 or less, or 25,000 or less. More specific numerals are the same as described above. When the total fineness of the tow is outside these ranges, the processability of manufacturing filters for a smoking article is not good (continuous process by cutting is impossible), and the amount of tow filled into the filter wrapper when manufacturing filters for a smoking article is too small or too large, and thus, it is difficult to obtain sufficient filter properties (for example, suction resistance).

The total fineness of the tow as described above may be determined depending on the single fineness of the filament and the number of crimps. Regarding the method of the present application, since the single fineness and the number of crimps are controlled as described above, the total fineness of the tow, suitable for manufacturing filters for a smoking article and ensuring the function thereof, may be obtained.

Although not particularly limited, the lyocell material prepared by this method may be used in filters for a smoking article.

An embodiment of the present application provides a filter for a smoking article. The filter for a smoking article includes a lyocell material, and the lyocell material is the same as described above.

Specifically, the filter for a smoking article of the present application is a filter for a smoking article including a lyocell material, wherein the lyocell material includes a lyocell multifilament to which a crimp is applied, and an oil applied on the lyocell multifilament. The oil includes at least (a) an esterification product of a fatty acid having at least 16 carbon atoms and an aliphatic monohydric alcohol; and (b) an esterification product of sorbitan and a fatty acid having at least 16 carbon atoms.

In some embodiments, the lyocell material may include an oil in an amount of at least 2.0 wt%, based on 100 wt% of the total amount of the lyocell material. Other descriptions of the oil components and amounts according to embodiments of the present application are the same as those described above

In an embodiment, the single fineness of the filaments constituting the lyocell multifilament may be 1.5 denier to 8.0 denier. The specific numerals are the same as described above.

In an embodiment, the lyocell multifilament to which the crimp is applied, may be a crimped tow with a total fineness of 15,000 denier to 45,000 denier. The specific numerals are the same as described above

In an embodiment, the crimped lyocell multifilament may have 7,87-19,67 crimps per centimetre (20 to 50 crimps per inch). The specific numerals are the same as described above.

In an embodiment, the filter for a smoking article may further include a binder on the surface of a crimp-applied lyocell multifilament or between crimp-applied lyocell multifilaments. The binder may increase the hardness of filters for a smoking article made of tow, preventing filters from being caught when filters are manufactured or cigarettes are manufactured. The description of the type, components, and amount of the binder available is the same as described above

In an embodiment, the filter for a smoking article may further include a wrapper (may be referred to as a wrapper paper, filter paper, or filter wrapper). For example, the wrapper may be porous or non-porous paper with which the lyocell tow described above (i.e., tow treated with at least an oil and applied with a crimp) is wrapped and which is capable of maintaining the shape of a filter (for example, column or cylinder).

In an embodiment, when a porous wrapper is used, the wrapper may have a porosity of 10 Coresta units (CU) to 50,000 CU. Specifically, the lower limit of porosity of the wrapper may be, for example, at least 1000 CU, at least 5000 CU, at least 10000 CU, at least 15000 CU, at least 20000 CU, at least 25000 CU, at least 30000 CU, at least 35000 CU, at least 40000 CU, or at least 45000 CU, and the upper limit thereof may be, for example, 45000 CU or less, 40000 CU or less, 35000 CU or less, 30000 CU or less, 25000 CU or less, or 20000 CU or less. In an embodiment of the present application, the wrapper may have a porosity in the range of 22,000 CU to 26,000 CU or 23,000 CU to 25,000 CU.

In an embodiment, the basis weight of the wrapper may be 15 $g/cm^2$ to 60 $g/cm^2$. In some embodiments, the lower limit of the basis weight of the wrapper may be, for example, at least 20 $g/cm^2$, at least 25 $g/cm^2$, at least 30 $g/cm^2$, at least 35 $g/cm^2$, at least 40 $g/cm^2$, at least 45 $g/cm^2$, at least 50 $g/cm^2$, or at least 55 $g/cm^2$, and the upper limit thereof may be, for example, 55 $g/cm^2$ or less, 50 $g/cm^2$ or less, 45 $g/cm^2$ or less, 40 $g/cm^2$ or less, 35 $g/cm^2$ or less, 30 $g/cm^2$ or less, 25 $g/cm^2$ or less, or 20 $g/cm^2$ or less. In embodiments of the present application, the wrapper may have the basis weight of at least 16 $g/cm^2$, at least 17 $g/cm^2$, at least 18 $g/cm^2$, at least 19 $g/cm^2$, at least 20 $g/cm^2$, or at least 21 $g/cm^2$, and 25 $g/cm^2$ or less, 24 $g/cm^2$ or less, 23 $g/cm^2$ or less, 22 $g/cm^2$ or less, or 21 $g/cm^2$ or less.

In an embodiment of the present application, the filter for the smoking article may have a predetermined shape and size.

For example, the filter may have a rod shape. In some embodiments, the filter for a smoking article may have a cylinder-like shape.

In some embodiments, the filter may have a length of, for example, 10 mm to 50 mm. In some embodiments, the length of the filter may have the lower limit of at least 15 mm, at least 20 mm, at least 25 mm, at least 30 mm, at least 35 mm, at least 40 mm, or at least 45 mm, and the upper limit of 45 mm or less, 40 mm or less, 35 mm or less, 30 mm or less, 25 mm or less, 20 mm or less, or 15 mm or less.

In an embodiment of the present application, the filter having these lengths may have a circular cross section, and the circumference of the circular cross section may be 10 mm to 40 mm. For example, the circumference of the filter may have the lower limit of at least 15 mm, at least 20 mm, at least 25 mm, at least 30 mm, or at least 35 mm, and the upper limit of 35 mm or less, 30 mm or less, 25 mm or less, 20 mm or less, or 15 mm or less.

A filter for a smoking article may satisfy a diameter retention ratio (or hardness retention ratio) of the filter before water injection, calculated according to Equation 1-1 below, of at least 85%.

Filter diameter (or hardness) retention ratio (%) before water injection = {(Initial filter diameter (mm) - The length by which the filter is pressed when the filter is pressed with a weight of a certain weight (300 g) (mm))/(Initial filter diameter (mm))} x 100          Equation 1-1

Although not particularly limited, in relation to Equation 1-1 above, the diameter of the initial filter or the length by which the filter is pressed may be confirmed through cross sections at opposite ends of the filter having a predetermined length.

For example, the diameter (or hardness) retention ratio of the filter before water injection calculated according to Equation 1-1 above may be at least 86 %, at least 87 %, at least 88 %, at least 89 %, at least 90 %, at least 91 %, at least 92 %, at least 93 %, at least 94 %, or at least 95 %. When the diameter (or hardness) retention ratio (%) of the filter before water injection according to Equation 1-1 does not satisfy these retention ratios, this indicates that the hardness of the filter is insufficient.

A filter for a smoking article may satisfy a diameter retention ratio (or hardness retention ratio) of the filter after water injection, expressed according to Equation 1-2 below, of at least 80%.

Filter diameter (or hardness) retention ratio (%) after water injection = {(Initial filter diameter (mm) - The length by which the filter is pressed when the filter is pressed with a weight of a certain weight (300g) after water injection (mm))/(Initial filter diameter (mm))} x 100    Equation 1-2

Although not particularly limited, in relation to Equation 1-2 above, the diameter of the initial filter or the length by which the filter is pressed may be confirmed through cross sections at opposite ends of the filter having a predetermined length.

Regarding Equation 1-2 above, the type of water to be injected is not particularly limited. For example, the water may be distilled water or tap water.

In relation to Equation 1-2 above, the amount of water injected may be 20 $\mu$l. In this regard, the amount of water injected may have an error within $\pm 5$ $\mu$l, $\pm 4$ $\mu$l, $\pm 3$ $\mu$l, $\pm 1$ $\mu$l, $\pm 0.5$ $\mu$l, or $\pm 0.1$ $\mu$l.

The diameter retention ratio of Equation 1-2 may be measured 5 minutes after water is injected into the filter. In this regard, the time at which the diameter retention ratio is measured, may show an error of within $\pm 3$ minutes, within $\pm 2$ minutes, within $\pm 1$ minute, or within $\pm 30$ seconds.

In addition, the injection of water into the filter may be injection of portions of water at equal intervals in the longitudinal direction of the filter (the direction of the dimension with the longest length in the shape of the filter, or in the case where the filter is symmetrical, the longitudinal direction of the symmetry axis). For example, in the case where 20 $\mu$l of water is injected, the filter may be divided into three parts in the filter length direction (the direction of the dimension with the longest length in the shape of the filter), and 6 $\mu$l to 7 $\mu$l of water may be injected into a certain point (for example, center) or area of each of the three parts.

For example, the diameter (or hardness) retention ratio of the filter after water injection calculated according to Equation 1-2 above may be at least 81 %, at least 82 %, at least 83 %, at least 84 %, at least 85 %, at least 86 %, at least 87 %, at least 88 %, at least 89 %, at least 90 %, at least 91 %, or at least 92 %. When the diameter (or hardness) retention ratio of the filter after water injection according to Equation 1-2 does not satisfy the diameter retention ratios, it indicates that the change in hardness of the filter due to moisture permeation is large. As in the experiment described later, since an oil is applied to the filter for a smoking article of the present application as described above, hardness change is suppressed even after water injection, and thus a high level of diameter (or hardness) retention ratio may be obtained.

A filter for a smoking article may have a moisture disintegration ratio calculated according to Equation 2 of 8.0% or less.

Moisture disintegration ratio (%) = {(Filter diameter retention ratio before water injection - Filter diameter retention ratio after water injection)/(Filter diameter retention ratio before water injection)} $\times$ 100    Equation 2

In Equation 2, the filter diameter retention ratio before water injection may be calculated according to Equation 1-1, and the filter diameter retention ratio after water injection may be calculated according to Equation 1-2.

For example, the moisture disintegration ratio calculated according to Equation 2 may be 7.5 % or less or 7.0 % or less, for example, 6.5 % or less, 6.0 % or less, 5.5 % or less, 5.0 % or less, 4.5 % or less, 4.0 % or less, 3.5 % or less, 3.0 % or less, 2.5 % or less, or 2.0 % or less. When the moisture disintegration ratios are satisfied, this indicates that even if a predetermined amount of moisture permeates into the filter, the degree of collapse of the filter due to change in hardness is not significant. As in the experiments described later, the filter for a smoking article of the present application may exhibit a low degree of moisture disintegration ratio because the oil is applied as described above.

Although not particularly limited, measurements of the diameter change (hardness change) and moisture disintegration ratio according to Equation 1-1, Equation 1-2, and Equation 2, may be performed for a rod-shaped filter having the weight of at least 50 mg. The weight of a filter may have the lower limit of, for example, at least 100 mg, at least 150 mg, or at least 200 mg, and the upper limit of 500 mg or less, 450 mg or less, 400 mg or less, 350 mg or less, 300 mg or less, 250 mg or less, or 200 mg or less.

Another example related to the present application provides a filter for a smoking article that exhibits a characteristic of being not significantly reducing hardness even when moisture permeates, that is, that effectively prevents the hardness of the filter from being lowered by the smoker's saliva, etc. The above characteristics can be calculated according to Equations 1-1, 1-2, and 2 below

A filter for a smoking article may satisfy a diameter retention ratio (or hardness retention ratio) of the filter before water injection, calculated according to Equation 1-1 below, of at least 85%.

Filter diameter (or hardness) retention ratio (%) before water injection = {(Initial filter diameter (mm) - The length by which the filter is pressed when the filter is pressed with a weight of a certain weight (300 g) (mm))/(Initial filter diameter (mm))} x 100      Equation 1-1

Although not particularly limited, in relation to Equation 1-1 above, the diameter of the initial filter or the length by which the filter is pressed, may be confirmed through cross sections at opposite ends of the filter having a predetermined length.

For example, the diameter (or hardness) retention ratio of the filter before water injection calculated according to Equation 1-1 above may be at least 85 %, at least 86 %, at least 87 %, at least 88 %, at least 89 %, at least 90 %, at least 91 %, at least 92 %, at least 93 %, at least 94 %, or at least 95 %. When the diameter (or hardness) retention ratio (%) of the filter before water injection according to Equation 1-1 does not satisfy these retention ratios, this indicates that the hardness of the filter is insufficient.

A filter for a smoking article may satisfy a diameter retention ratio(or hardness retention ratio) of the filter after water injection, expressed according to Equation 1-2 below, of at least 80%.

Filter diameter (or hardness) retention ratio (%) after water injection = {(Initial filter diameter (mm) - The length by which the filter is pressed when the filter is pressed with a weight of a certain weight (300 g) after water injection (mm))/(Initial filter diameter (mm))} x 100      Equation 1-2

Although not particularly limited, in relation to Equation 1-2 above, the diameter of the initial filter or the length by which the filter is pressed may be confirmed through cross sections at opposite ends of the filter having a predetermined length.

Regarding Equation 1-2 above, the type of water to be injected is not particularly limited. For example, the water may be distilled water or tap water.

In relation to Equation 1-2 above, the amount of water injected may be 20 $\mu$l. In this regard, the amount of water injected may have an error within $\pm 5$ $\mu$l, $\pm 4$ $\mu$l, $\pm 3$ $\mu$l, $\pm 1$ $\mu$l, $\pm 0.5$ $\mu$l, or $\pm 0.1$ $\mu$l.

In an embodiment of the present application, the diameter retention ratio of Equation 1-2 may be measured 5 minutes after water is injected into the filter. In this regard, the time at which the diameter retention ratio is measured, may show an error of within $\pm 3$ minutes, within $\pm 2$ minutes, within $\pm 1$ minute, or within $\pm 30$ seconds.

In addition, the injection of water into the filter may be injection of portions of water at equal intervals in the longitudinal direction of the filter (the direction of the dimension with the longest length in the shape of the filter, or in the case where the filter is symmetrical, the longitudinal direction of the symmetry axis). For example, in the case where 20 $\mu$l of water is injected, the filter may be divided into three parts in the filter length direction (the direction of the dimension with the longest length in the shape of the filter), and 6 $\mu$l to 7 $\mu$l of water may be injected into a certain point (for example, center) or area of each of the three parts.

For example, the diameter (or hardness) retention ratio of the filter after water injection calculated according to Equation 1-2 above may be at least 81 %, at least 82 %, at least 83 %, at least 84 %, at least 85 %, at least 86 %, at least 87 %, at least 88 %, at least 89 %, at least 90 %, at least 91 %, or at least 92 %. When the diameter (or hardness) retention ratio of the filter after water injection according to Equation 1-2 does not satisfy the diameter retention ratios, it indicates that the change in hardness of the filter due to moisture permeation is large. As in the experiment described later, since an oil is applied to the filter for a smoking article of the present application as described above, hardness change is suppressed even after water injection, and thus a high level of diameter (or hardness) retention ratio may be obtained.

A filter for a smoking article may have a moisture disintegration ratio calculated according to Equation 2 of 8.0% or less.

Moisture disintegration ratio (%) = {(Filter diameter retention ratio before water injection - Filter diameter retention ratio after water injection)/(Filter diameter retention ratio before water injection)} $\times$ 100      Equation 2

In Equation 2, the filter diameter retention ratio before water injection may be calculated according to Equation 1-1, and the filter diameter retention ratio after water injection may be calculated according to Equation 1-2.

For example, the moisture disintegration ratio calculated according to Equation 2 may be 7.5 % or less or 7.0 % or less, for example, 6.5 % or less, 6.0 % or less, 5.5 % or less, 5.0 % or less, 4.5 % or less, 4.0 % or less, 3.5 % or less, 3.0 % or less, 2.5 % or less, or 2.0 % or less. When the moisture disintegration ratios are satisfied, this indicates that even if a predetermined amount of moisture permeates into the filter, the degree of collapse of the filter due to change in hardness is not significant. As in the experiments described later, the filter for a smoking article of the present application may exhibit a low degree of moisture disintegration ratio because the oil is applied as described above.

A filter for a smoking article for which measurements related to Equation 1-1, Equation 1-2, and Equation 2 are made, may have a predetermined shape and size.

For example, the filter may have a rod shape. The filter for a smoking article may have a cylinder-like shape.

The filter may have a length of, for example, 10 mm to 50 mm. In some embodiments, the length of the filter may have the lower limit of at least 15 mm, at least 20 mm, at least 25 mm, at least 30 mm, at least 35 mm, at least 40 mm, or at least 45 mm, and the upper limit of 45 mm or less, 40 mm or less, 35 mm or less, 30 mm or less, 25 mm or less, 20 mm or less, or 15 mm or less.

The filter having these lengths may have a circular cross section, and the circumference of the circular cross section may be 10 mm to 40 mm. For example, the circumference of the filter may have the lower limit of at least 15 mm, at least 20 mm, at least 25 mm, at least 30 mm, or at least 35 mm, and the upper limit of 35 mm or less, 30 mm or less, 25 mm or less, 20 mm or less, or 15 mm or less.

In an embodiment, the filter for a smoking article may include lyocell tow (i.e., lyocell multifilament with a crimp applied), an oil applied on the lyocell multifilament, and a filter wrapper. The descriptions of lyocell tow and oil are the same as described above, and will be omitted herein.

The wrapper may be porous or non-porous paper with which the lyocell tow described above (i.e., tow which is treated with at least an oil and to which a crimp is applied) is wrapped and which is capable of maintaining the shape of a filter (for example, column or cylinder).

In an embodiment, when a porous wrapper is used, the wrapper may have a porosity of 10 Coresta units (CU) to 50,000 CU. Specifically, the lower limit of porosity of the wrapper may be, for example, at least 1000 CU, at least 5000 CU, at least 10000 CU, at least 15000 CU, at least 20000 CU, at least 25000 CU, at least 30000 CU, at least 35000 CU, at least 40000 CU, or at least 45000 CU, and the upper limit thereof may be, for example, 45000 CU or less, 40000 CU or less, 35000 CU or less, 30000 CU or less, 25000 CU or less, or 20000 CU or less. In an embodiment of the present application, the wrapper may have a porosity in the range of 22,000 CU to 26,000 CU or 23,000 CU to 25,000 CU.

In an embodiment, the basis weight of the wrapper may be 15 $g/cm^2$ to 60 $g/cm^2$. In some embodiments, the lower limit of the basis weight of the wrapper may be, for example, at least 20 $g/cm^2$, at least 25 $g/cm^2$, at least 30 $g/cm^2$, at least 35 $g/cm^2$, at least 40 $g/cm^2$, at least 45 $g/cm^2$, at least 50 $g/cm^2$, or at least 55 $g/cm^2$, and the upper limit thereof may be, for example, 55 $g/cm^2$ or less, 50 $g/cm^2$ or less, 45 $g/cm^2$ or less, 40 $g/cm^2$ or less, 35 $g/cm^2$ or less, 30 $g/cm^2$ or less, 25 $g/cm^2$ or less, or 20 $g/cm^2$ or less. In embodiments of the present application, the wrapper may have the basis weight of at least 16 $g/cm^2$, at least 17 $g/cm^2$, at least 18 $g/cm^2$, at least 19 $g/cm^2$, at least 20 $g/cm^2$, or at least 21 $g/cm^2$, and 25 $g/cm^2$ or less, 24 $g/cm^2$ or less, 23 $g/cm^2$ or less, 22 $g/cm^2$ or less, or 21 $g/cm^2$ or less.

Although not particularly limited, measurements of the diameter change (hardness change) and moisture disintegration ratio according to Equation 1-1, Equation 1-2, and Equation 2, may be performed for a rod-shaped filter having the weight of at least 50 mg. In some embodiments, the weight of the filter may have the lower limit of, for example, at least 100 mg, at least 150 mg, or at least 200 mg, and the upper limit of 500 mg or less, 450 mg or less, 400 mg or less, 350 mg or less, 300 mg or less, 250 mg or less, or 200 mg or less.

Other descriptions of filters for a smoking article and materials included therein are the same as described above, and thus will be omitted herein.

An embodiment of the present application provides a method of manufacturing a filter for a smoking article. The method is a method of manufacturing the filter for lyocell smoking articles described above, and may be a method including the method of manufacturing the lyocell material described above.

Specifically, the method of manufacturing a filter for a smoking article according to the present application may include: treating a lyocell multifilament with an oil; applying a crimp to the lyocell multifilament; and manufacturing a filter using a lyocell multifilament to which a crimp is applied.

In addition, the oil used to treat the multifilament in the method may include at least (a) an esterification product of a fatty acid having at least 16 carbon atoms and an aliphatic monohydric alcohol; and (b) an esterification product of sorbitan and a fatty acid having at least 16 carbon atoms.

In addition, according to an embodiment of the present application, the lyocell multifilament included in the filter for a smoking article may include the oil in an amount of at least 2.0 wt% based on 100 wt% of the total weight of the lyocell multifilament. In this regard, the lyocell multifilament included in the filter for a smoking article is a multifilament that has been treated with at least an oil. For example, the lyocell material may be: a lyocell multifilament to which a first oil treatment is applied; a lyocell multifilament to which a first oil treatment and a second oil treatment are applied; or a lyocell multifilament to which a binder, which will be described later, and the oil treatments are applied. In addition, the lyocell multifilament treated with oil and/or a binder as described above may be a lyocell multifilament to which a crimp is applied. Specific numeral values regarding the amount of the oil are the same as described above.

With regard to the method of manufacturing a filter for a smoking article, the remaining processes except for the process of manufacturing the filter are the same as those described for the lyocell material described above, so the description is omitted. In addition, descriptions that overlap with those described above will also be omitted.

The process of manufacturing a filter may be appropriately performed by a person skilled in the art according to known methods. For example, a filter may be manufactured by forming a tow-filled wrapper into a rod shape. Alternatively, a filter may be manufactured by cutting filter paper filled with a rod-shaped tow to an appropriate length. The description of the wrapper is the same as above.

Although there is no particular limitation, before filling the filter paper with tow, the tow may be additionally subjected to opening or a plasticizer treatment.

Another embodiment of the present application provides a smoking article including a lyocell material. The lyocell material has the same composition and/or characteristics as described above, and description thereof will be omitted.

Another embodiment of the present application provides a smoking article including a filter for a smoking article. The filter for a smoking article has the same composition and/or characteristics as described above, and description thereof will be omitted.

Herein described is (not according to the invention) an oil that is applied (for example, coating) to lyocell tow. The oil of the present application may overcome the hydrophilicity of the surface of the lyocell material for a filter for a smoking article and increase the degree of decrease in hardness of the lyocell material due to moisture.

The oil includes (a) an esterification product of a fatty acid having at least 16 carbon atoms and an aliphatic monohydric alcohol; and (b) an esterification product of sorbitan and a fatty acid having at least 16 carbon atoms. In an embodiment, the oil may further include, as component (c), an alkylene oxide adduct with respect to the component (b).

The detailed description of each component included in the oil is the same as described above. Accordingly, the description will be omitted herein.

Advantageous Effects

According to the present application, provided are a lyocell material for a filter for a smoking article that can replace commercialized cellulose acetate (CA) and a filter for a smoking article including the same. Specifically, the present application not only provides a lyocell material with excellent manufacturing processability and biodegradability, but also has the effect of improving the hardness of a filter and physical properties of smoking articles (for example, cigarettes).

Mode for Invention

Hereinafter, the operations and effects of the disclosure will be described in more detail through specific examples of the disclosure. However, this is presented as an example of the disclosure, and the scope of the disclosure is not limited thereby.

**<Experiment 1: Evaluation of sinking time of lyocell tow>**

A lyocell material was manufactured through the same process as described in Preparation Example below. Conditions not specifically described are within the scope of the above description.

**Preparation Example**

Cellulose pulp with an alpha-cellulose amount of 93.9% and a degree of polymerization (DPw) of 820 was mixed with NMMO/$H_2$O solvent having a propyl gallate amount of 0.01 wt% to prepare a spinning dope for producing tow with a concentration of 11 wt%. Then, while maintaining the spinning temperature at 110°C in a spinning nozzle, the discharge amount and the spinning speed were appropriately adjusted, and the spinning dope was spun.

The spinning dope in the form of the filament discharged from the spinning nozzle was supplied to the coagulating liquid in the coagulation bath (coagulating liquid with a concentration of 75 wt% water and 25 wt% NMMO and at a temperature of about 25°C) through the air gap section. In this regard, the cooling air in the air gap section first coagulates the spinning dope at a temperature of 8°C and an air flow rate of 200 N $m^3$/h. Additionally, the concentration of the coagulating liquid was continuously monitored using a sensor and a refractometer.

Then, the coagulated lyocell filament was washed. Specifically, the filament was introduced into a towing roller, and the remaining NMMO in the filament was removed using the washing liquid sprayed from a washing device. Then, the washed filament was immersed in a bath designed to have a predetermined oil concentration.

The filament was treated at a pressure of 2 kgf/$cm^2$ using a nip roll installed in the bath discharge section, and was put into a crimp machine to provide wrinkles. Specifically, the steam pressure of 0.5 kgf/$cm^2$ was supplied to a steam box, the pressure of the roller of the crimp device was set to be 2.5 kgf/$cm^2$, and the pressure of the doctor blade was set to be 0.5 kgf/$cm^2$ to manufacture the tow.

The manufactured tow was subjected to a second oil treatment to prevent static electricity and provide flexibility, and immediately after the second oil treatment, the resultant tow was passed through a continuous dryer set at 120°C to obtain a dry tow product.

The manufactured tow has a single fineness of 3.0 denier to 3.5 denier, a total fineness of 36,000 denier to 40,000 denier, and a crimp number of 9,84 ea/cm (25 ea/inch) to 13,78 ea/cm (35 ea/inch)

For reference, the types (components) of an oil and/or the oil pick up ratio (OPU) in Examples and Comparative Examples are different as follows.

**Example 1**

As in Preparation Example, oil-treated lyocell tow was used. In this experiment, the oil used in the production of tow included about 60 wt% of isotridecyl stearate, about 22 wt% of sorbitan monooleate, about 16 wt% of polyoxyethylene sorbitan monooleate, and the remaining amount of water, and OPU was 5.6 wt%.

**Example 2**

As in Preparation Example, oil-treated lyocell tow was used. In this experiment, the oil used in the production of tow included about 50 wt% of isotridecyl stearate, about 27 wt% of sorbitan monooleate, about 21 wt% of polyoxyethylene sorbitan monooleate, and the remaining amount of water, and OPU was 5.1 wt%.

**Example 3**

The same lyocell tow as in Example 1 was used, except that the OPU was 3.16 wt%.

**Example 4**

The same lyocell tow as in Example 1 was used, except that the OPU was 2.15 wt%.

**Comparative Example 1**

Lyocell tow was used in the same manner as in Preparation Example, except that no oil treatment was performed.

**Comparative Example 2**

As in Preparation Example, oil-treated lyocell tow was used. The oil used in tow production was JKP-107C, which can be classified as a hydrophilic oil, and the OPU was 2.1 wt%. The JKP-107C is known to include at least about 40 wt% of polyoxyethylene alkylether, at least about 10 wt% of polyethyleneglycol, at least about 20 wt% of polyethyleneglycol alkylester, at least about 13 wt% of polyoxyethylene alkylphosphate, at least about 9 wt% of dialkyl sulfosuccinate and/or a salt thereof, at least about 3 wt% of fattyalcohol amine, and at least about 5 wt% of water

**Comparative Example 3**

The same lyocell tow as in Example 1 was used, except that the OPU was 0.23 wt%.

The sinking time was evaluated for each of the tows of Examples 1-3 and Comparative Examples 1-4 prepared as above in the following manner.

**Sinking time (seconds) evaluation method**

The tows (oil-treated tows) of Examples and Comparative Examples were cut into 8 cm-sized pieces. The sample tows prepared from Examples and Comparative Examples were each placed in a beaker filled with 1,000 ml of water (In this regard, the outer diameter of the beaker was 108 mm, the height thereof was 158 mm, and the water level was about 12.5 cm), and the time (seconds) taken for the tow to fall to the bottom of the sample was measured. The sinking time shown in the table below is the arithmetic average value obtained after repeating the experiment described above three times for the sample tow collected from each example or comparative example.

[Table 1]

|  | OPU(wt%)* | Sinking time (unit: seconds (s)) |
|---|---|---|
| Example 1 | Hydrophobic oil 5.6 | 9.46 |
| Example 2 | Hydrophobic oil 5.5 | 8.99 |
| Example 3 | Hydrophobic oil 3.16 | 7.79 |
| Example 4 | Hydrophobic oil 2.15 | 6.12 |
| Comparative Example 1 | - | 1.35 |
| Comparative Example 2 | Hydrophilic oil 2.1 | 2.02 |
| Comparative Example 3 | Hydrophobic oil 0.23 | 1.58 |
| • OPU: Measured by the method described above. | | |

Through Table 1 above, it was confirmed that the tow sinking time of Examples is longer than that of Comparative Examples. The results indicate that the tow surface of Examples has a stronger hydrophobicity. Tows with stronger hydrophobicity can more effectively inhibit hardness collapse caused by saliva when used as filter materials for a smoking article. This is also confirmed in the experiment below.

**<Experiment 2: Evaluation of change in hardness of filter including lyocell tow>**

**Example 4**

The lyocell tow of Example 1 was wrapped with wrapping paper (24,000 CU porous paper, basis weight of about 21 g/cm$^2$), and a cylindrical filter rod (weight of 150 mg to 200 mg) had an axial length of 27 mm and a circumference of 24.22 mm.

**Example 5**

A filter rod was manufactured in the same manner as in Example 4, except that the lyocell tow of Example 2 was used.

**Example 6**

A filter rod was manufactured in the same manner as in Example 4, except that the lyocell tow of Example 3 was used.

**Comparative Example 5**

A filter rod was manufactured in the same manner as Example 4, except that the lyocell tow of Comparative Example 1 was used.

**Comparative Example 6**

A filter rod was manufactured in the same manner as in Example 4, except that the lyocell tow of Comparative Example 2 was used.

**Comparative Example 7**

A filter rod was manufactured in the same manner as in Example 4, except that the lyocell tow of Comparative Example 3 was used.

**Comparative Example 8**

A filter rod was manufactured in the same manner as in Example 4, except that the lyocell tow of Comparative Example 4 was used.

For each filter of Example and Comparative Examples manufactured as above, the change in hardness (or change in diameter) was evaluated in the following manner.

**Change in filter hardness (%) or change in filter diameter (%)**

20 μl of water (for example, distilled water or tap water) was injected into each of the filters prepared in Examples 5-8 and Comparative Examples 4-7, and the changes in hardness (diameter change) before water injection and after 5 minutes after water injection, were confirmed. In this regard, water was injected in three parts at positions 4.5 mm, 13.5 mm, and 22.5 mm from one end of a 27 mm-long filter rod. The water injection amount is a value set after a group of smokers independently measures the amount of moisture remaining in the filter after smoking a tobacco product.

The change in hardness of the filter due to water permeation into the filter and the degree of collapse of the filter due to moisture may be calculated through the change in diameter of the filter as follows. For these measurements, the DHT 200™ instrument from Filtrona was used.

Filter diameter (or hardness) retention ratio (%) before water injection = {(Initial filter diameter (mm) - The length by which the filter is pressed when the filter is pressed with a weight of a certain weight (300 g) (mm))/(Initial filter diameter (mm))} x 100          Equation 1-1

Filter diameter (or hardness) retention ratio (%) after water injection = {(Initial filter diameter (mm) - The length by which the filter is pressed when the filter is pressed with a weight of a certain weight (300 g) after water injection (mm))/(Initial filter diameter (mm))} x 100          Equation 1-2

Moisture disintegration ratio (%) = {(Filter diameter retention ratio before water injection - Filter diameter retention ratio after water injection)/(Filter diameter retention ratio before water injection)}×100          Equation 2

[Table 2]

|  | Tow used | OPU(wt%)* | Before water injection Change in diameter (Equation 1-1, %) | After water injection Diameter change (Equation 1-2, %) | Moisture disintegration ratio (Equation 2, %) |
|---|---|---|---|---|---|
| Example 5 | Example 1 | Hydrophobic oil 5.6 | 92.8 | 89.0 | 4.09 |
| Example 6 | Example 2 | Hydrophobic oil 5.5 | 91.6 | 85.9 | 6.22 |
| Example 7 | Example 3 | Hydrophobic oil 3.16 | 89.2 | 83.6 | 6.27 |
| Example 8 | Example 4 | Hydrophobic oil 2.15 | 87.7 | 80.8 | 7.87 |
| Comparative Example 4 | Comparative Example 1 | - | Poor filter manufacturing* | Poor filter manufacturing | - |
| Comparative Example 5 | Comparative Example 2 | Hydrophilic oil 2.1 | 82.0 | 76.0 | 7.32 |
| Comparative Example 6 | Comparative Example 3 | Hydrophobic oil 0.23 | Poor filter manufacturing | Poor filter manufacturing |  |
| • OPU: Measured by the method described above. • Poor filter manufacturing: During filter manufacturing, tow is not spread evenly during a spreading process, is lumped together, or is not cut smoothly since hardness is not imparted. | | | | | |

Table 2 shows that the degree of hardness change (particularly, hardness change after water injection) of Examples is greater than those of Comparative Examples. The results indicate that the tow surface of Examples has a stronger hydrophobicity. Tows with stronger hydrophobicity can more effectively inhibit hardness collapse caused by saliva when used as filter materials for a smoking article.

**Claims**

1. A lyocell material for a filter for a smoking article, the lyocell material comprising:

   a lyocell multifilament to which a crimp is applied; and an oil applied onto the lyocell multifilament, wherein the oil comprises (a) an esterification product of a fatty acid having at least 16 carbon atoms and an aliphatic monohydric alcohol; and (b) an esterification product of sorbitan and a fatty acid having at least 16 carbon atoms, and
   the lyocell material for a filter for a smoking article includes the oil in an amount of at least 2.0 wt% based on 100 wt% of a total weight of the lyocell material.

2. The lyocell material for a filter for a smoking article of claim 1, wherein the oil comprises, based on 100 parts by weight of the esterification product (a) of a fatty acid having at least 16 carbon atoms and an aliphatic monohydric alcohol, 20 parts by weight to 60 parts by weight of (b) the esterification product of sorbitan and a fatty acid having at least 16 carbon atoms.

3. The lyocell material for a filter for a smoking article of claim 1, wherein the oil further comprises (c) an alkylene oxide adduct with respect to the esterification product (b).

4. The lyocell material for a filter for a smoking article of claim 1, wherein the oil comprises 10 parts by weight to 50 parts by weight of (c) an alkylene oxide adduct with respect to the esterification product (b), based on 100 parts by weight of the esterification product (a) of a fatty acid having at least 16 carbon atoms and an aliphatic monohydric alcohol.

5. The lyocell material for a filter for a smoking article of claim 1, wherein the lyocell multifilament to which the crimp is applied has a total fineness of 15,000 denier to 45,000 denier and 20 to 50 crimps per inch.

6. A smoking article comprising the lyocell material according to any one of claims 1 to 5.

7. A method of manufacturing a lyocell material for a filter for a smoking article, the method comprising: treating a lyocell multifilament with an oil; and applying a crimp to the lyocell multifilament, wherein

   the oil comprises (a) an esterification product of a fatty acid having at least 16 carbon atoms and an aliphatic monohydric alcohol, and (b) an esterification product of sorbitan and a fatty acid having at least 16 carbon atoms, and
   the lyocell material for a filter for a smoking article comprises the oil in an amount of at least 2.0 wt% based on 100 wt% of a total weight of the lyocell material.

8. The method of claim 7, wherein the oil comprises, based on 100 parts by weight of the esterification product (a) of a fatty acid having at least 16 carbon atoms and an aliphatic monohydric alcohol, 20 parts by weight to 60 parts by weight of the esterification product (b) of sorbitan and a fatty acid having at least 16 carbon atoms.

9. The method of claim 7, wherein the oil further comprises (c) an alkylene oxide adduct with respect to the esterification product (b).

10. The method of claim 7, wherein the oil comprises 10 parts by weight to 50 parts by weight of (c) an alkylene oxide adduct with respect to the esterification product (b), based on 100 parts by weight of the esterification product (a) of a fatty acid having at least 16 carbon atoms and an aliphatic monohydric alcohol.

11. The method of claim 7, wherein the lyocell multifilament has a total fineness of 15,000 denier to 45,000 denier and 20 to 50 crimps per inch.

12. A filter for a smoking article comprising a lyocell material, wherein

   the lyocell material comprises: a lyocell multifilament to which a crimp is applied; and an oil applied onto the lyocell multifilament,

the oil comprises (a) an esterification product of a fatty acid having at least 16 carbon atoms and an aliphatic monohydric alcohol, and (b) an esterification product of sorbitan and a fatty acid having at least 16 carbon atoms, and

the lyocell material comprises the oil in an amount of at least 2.0 wt%, based on 100 wt% of a total amount of the lyocell material.

13. The filter of claim 12, wherein

the oil comprises, based on 100 parts by weight of the esterification product (a) of a fatty acid having at least 16 carbon atoms and an aliphatic monohydric alcohol, 20 parts by weight to 60 parts by weight of the esterification product (b) of sorbitan and a fatty acid having at least 16 carbon atoms, and/or wherein the oil further comprises (c) an alkylene oxide adduct with respect to the esterification product (b).

14. The filter of claim 12, wherein the oil comprises 10 parts by weight to 50 parts by weight of (c) an alkylene oxide adduct with respect to the esterification product (b), based on 100 parts by weight of the esterification product (a) of a fatty acid having at least 16 carbon atoms and an aliphatic monohydric alcohol.

15. The filter of claim 12, wherein the lyocell multifilament to which the crimp is applied, has a total fineness of 15,000 denier to 45,000 denier and 20 to 50 crimps per inch.

**Patentansprüche**

1. Lyocell-Material für einen Filter für einen Rauchartikel, wobei das Lyocell-Material umfasst:

ein Lyocell-Multifilament, das einer Kräuselung unterzogen wurde; und wobei ein Öl auf das Lyocell-Multifilament aufgebracht wurde, wobei das Öl (a) ein Veresterungsprodukt aus einer Fettsäure mit mindestens 16 Kohlenstoffatomen und einem aliphatischen einwertigen Alkohol; und (b) ein Veresterungsprodukt aus Sorbitan und einer Fettsäure mit mindestens 16 Kohlenstoffatomen umfasst, und das Lyocell-Material für einen Filter für einen Rauchartikel das Öl in einer Menge von mindestens 2,0 Gew.-%, bezogen auf 100 Gew.-% eines Gesamtgewichts des Lyocell-Materials, enthält.

2. Lyocell-Material für einen Filter für einen Rauchartikel nach Anspruch 1, wobei das Öl, basierend auf 100 Gewichtsteilen des Veresterungsprodukts (a) aus einer Fettsäure mit mindestens 16 Kohlenstoffatomen und einem aliphatischen einwertigen Alkohol, 20 Gewichtsteile bis 60 Gewichtsteile von (b) dem Veresterungsprodukts aus Sorbitan und einer Fettsäure mit mindestens 16 Kohlenstoffatomen umfasst.

3. Lyocell-Material für einen Filter für einen Rauchartikel nach Anspruch 1, wobei das Öl des Weiteren (c) ein Alkylenoxid-Addukt in Bezug auf das Veresterungsprodukt (b) umfasst.

4. Lyocell-Material für einen Filter für einen Rauchartikel nach Anspruch 1, wobei das Öl 10 Gewichtsteile bis 50 Gewichtsteile von (c) einem Alkylenoxid-Addukt in Bezug auf das Veresterungsprodukt (b), basierend auf 100 Gewichtsteilen des Veresterungsprodukts (a) aus einer Fettsäure mit mindestens 16 Kohlenstoffatomen und einem aliphatischen einwertigen Alkohol, umfasst.

5. Lyocell-Material für einen Filter für einen Rauchartikel nach Anspruch 1, wobei das Lyocell-Multifilament, das einer Kräuselung unterzogen wurde, eine Gesamtfeinheit von 15.000 Denier bis 45.000 Denier und 20 bis 50 Kräuselungen pro Inch aufweist.

6. Rauchartikel, umfassend das Lyocell-Material nach einem der Ansprüche 1 bis 5 umfasst.

7. Verfahren zur Herstellung eines Lyocell-Materials für einen Filter für einen Rauchartikel, wobei das Verfahren umfasst: Behandeln eines Lyocell-Multifilaments mit einem Öl; und Kräuseln des Lyocell-Multifilaments, wobei

das Öl (a) ein Veresterungsprodukt aus einer Fettsäure mit mindestens 16 Kohlenstoffatomen und einem aliphatischen einwertigen Alkohol und (b) ein Veresterungsprodukt aus Sorbitan und einer Fettsäure mit mindestens 16 Kohlenstoffatomen umfasst und

das Lyocell-Material für einen Filter für einen Rauchartikel das Öl in einer Menge von mindestens 2,0 Gew.-%, basierend auf 100 Gew.-% eines Gesamtgewichts des Lyocell-Materials, umfasst.

8. Verfahren nach Anspruch 7, wobei das Öl, basierend auf 100 Gewichtsteilen des Veresterungsprodukts (a) aus einer Fettsäure mit mindestens 16 Kohlenstoffatomen und einem aliphatischen einwertigen Alkohol, 20 Gewichtsteile bis 60 Gewichtsteile des Veresterungsprodukts (b) aus Sorbitan und einer Fettsäure mit mindestens 16 Kohlenstoffatomen umfasst.

9. Verfahren nach Anspruch 7, wobei das Öl des Weiteren (c) ein Alkylenoxid-Addukt in Bezug auf das Veresterungsprodukt (b) umfasst.

10. Verfahren nach Anspruch 7, wobei das Öl 10 Gewichtsteile bis 50 Gewichtsteile von (c) einem Alkylenoxid-Addukt in Bezug auf das Veresterungsprodukt (b), basierend auf 100 Gewichtsteilen des Veresterungsprodukts (a) aus einer Fettsäure mit mindestens 16 Kohlenstoffatomen und einem aliphatischen einwertigen Alkohol, umfasst.

11. Verfahren nach Anspruch 7, wobei das Lyocell-Multifilament eine Gesamtfeinheit von 15.000 Denier bis 45.000 Denier und 20 bis 50 Kräuselungen pro Inch aufweist.

12. Filter für einen Rauchartikel, umfassend ein Lyocell-Material, wobei

das Lyocell-Material umfasst: ein Lyocell-Multifilament, das einer Kräuselung unterzogen wurde; und ein Öl, das auf das Lyocell-Multifilament aufgebracht wurde,
das Öl (a) ein Veresterungsprodukt aus einer Fettsäure mit mindestens 16 Kohlenstoffatomen und einem aliphatischen einwertigen Alkohol und (b) ein Veresterungsprodukt aus Sorbitan und einer Fettsäure mit mindestens 16 Kohlenstoffatomen umfasst und
das Lyocell-Material das Öl in einer Menge von mindestens 2,0 Gew.-%, basierend auf 100 Gew.-% einer Gesamtmenge des Lyocell-Materials, umfasst.

13. Filter nach Anspruch 12, wobei

das Öl, basierend auf 100 Gewichtsteilen des Veresterungsprodukts (a) aus einer Fettsäure mit mindestens 16 Kohlenstoffatomen und einem aliphatischen einwertigen Alkohol, 20 Gewichtsteile bis 60 Gewichtsteile des Veresterungsprodukts (b) aus Sorbitan und einer Fettsäure mit mindestens 16 Kohlenstoffatomen umfasst, und/oder
wobei das Öl des Weiteren (c) ein Alkylenoxid-Addukt in Bezug auf das Veresterungsprodukt (b) umfasst.

14. Filter nach Anspruch 12, wobei das Öl 10 Gewichtsteile bis 50 Gewichtsteile von (c) einem Alkylenoxid-Addukt in Bezug auf das Veresterungsprodukt (b), basierend auf 100 Gewichtsteilen des Veresterungsprodukts (a) aus einer Fettsäure mit mindestens 16 Kohlenstoffatomen und einem aliphatischen einwertigen Alkohol, umfasst.

15. Filter nach Anspruch 12, wobei das Lyocell-Multifilament, das einer Kräuselung unterzogen wurde, eine Gesamtfeinheit von 15.000 Denier bis 45.000 Denier und 20 bis 50 Kräuselungen pro Inch aufweist.

**Revendications**

1. Matériau lyocell pour un filtre destiné à un article à fumer, le matériau lyocell comprenant :

un multifilament de lyocell auquel une frisure est appliquée ; et une huile appliquée sur le multifilament de lyocell, dans lequel
l'huile comprend (a) un produit d'estérification d'un acide gras possédant au moins 16 atomes de carbone et d'un alcool monohydrique aliphatique ; et (b) un produit d'estérification du sorbitane et d'un acide gras possédant au moins 16 atomes de carbone, et
le matériau lyocell pour un filtre destiné à article à fumer inclut l'huile en une quantité d'au moins 2,0 % en poids sur la base de 100 % en poids d'un poids total du matériau lyocell.

2. Matériau lyocell pour un filtre destiné à un article à fumer selon la revendication 1, dans lequel l'huile comprend, sur la base de 100 parties en poids du produit d'estérification (a) d'un acide gras possédant au moins 16 atomes de carbone et d'un alcool monohydrique aliphatique, 20 parties en poids à 60 parties en poids du produit d'estérification (b) du sorbitane et d'un acide gras possédant au moins 16 atomes de carbone.

3. Matériau lyocell pour un filtre destiné à un article à fumer selon la revendication 1, dans lequel l'huile comprend en outre (c) un adduit d'oxyde d'alkylène par rapport au produit d'estérification (b).

4. Matériau lyocell pour un filtre destiné à un article à fumer selon la revendication 1, dans lequel l'huile comprend 10 parties en poids à 50 parties en poids d'un adduit d'oxyde d'alkylène (c) par rapport au produit d'estérification (b), sur la base de 100 parties en poids du produit d'estérification (a) d'un acide gras possédant au moins 16 atomes de carbone et d'un alcool monohydrique aliphatique.

5. Matériau lyocell pour un filtre destiné à un article à fumer selon la revendication 1, dans lequel le multifilament de lyocell auquel la frisure est appliquée a une finesse totale de 15 000 deniers à 45 000 deniers et de 20 à 50 frisures par pouce.

6. Article à fumer comprenant le matériau lyocell selon l'une quelconque des revendications 1 à 5.

7. Procédé de fabrication d'un matériau lyocell pour un filtre destiné à un article à fumer, le procédé comprenant de : traiter un multifilament de lyocell avec une huile ; et appliquer une frisure au multifilament de lyocell, dans lequel

   l'huile comprend (a) un produit d'estérification d'un acide gras possédant au moins 16 atomes de carbone et d'un alcool monohydrique aliphatique, et (b) un produit d'estérification du sorbitane et d'un acide gras possédant au moins 16 atomes de carbone, et
   le matériau lyocell pour un filtre destiné à article à fumer comprend l'huile en une quantité d'au moins 2,0 % en poids sur la base de 100 % en poids d'un poids total du matériau lyocell.

8. Procédé selon la revendication 7, dans lequel l'huile comprend, sur la base de 100 parties en poids du produit d'estérification (a) d'un acide gras possédant au moins 16 atomes de carbone et d'un alcool monohydrique aliphatique, 20 parties en poids à 60 parties en poids du produit d'estérification (b) du sorbitane et d'un acide gras possédant au moins 16 atomes de carbone.

9. Procédé selon la revendication 7, dans lequel l'huile comprend en outre un adduit d'oxyde d'alkylène (c) par rapport au produit d'estérification (b).

10. Procédé selon la revendication 7, dans lequel l'huile comprend 10 parties en poids à 50 parties en poids d'un adduit d'oxyde d'alkylène (c) par rapport au produit d'estérification (b), sur la base de 100 parties en poids du produit d'estérification (a) d'un acide gras possédant au moins 16 atomes de carbone et d'un alcool monohydrique aliphatique.

11. Procédé selon la revendication 7, dans lequel le multifilament de lyocell a une finesse totale de 15 000 deniers à 45 000 deniers et de 20 à 50 frisures par pouce.

12. Filtre pour un article à fumer comprenant un matériau lyocell, dans lequel

    le matériau lyocell comprend : un multifilament de lyocell auquel une frisure est appliquée ; et une huile appliquée sur le multifilament de lyocell,
    l'huile comprend (a) un produit d'estérification d'un acide gras possédant au moins 16 atomes de carbone et d'un alcool monohydrique aliphatique, et (b) un produit d'estérification du sorbitane et d'un acide gras possédant au moins 16 atomes de carbone, et
    le matériau lyocell comprend l'huile en une quantité d'au moins 2,0 % en poids sur la base de 100 % en poids d'une quantité totale du matériau lyocell.

13. Filtre selon la revendication 12, dans lequel

    l'huile comprend, sur la base de 100 parties en poids du produit d'estérification (a) d'un acide gras possédant au moins 16 atomes de carbone et d'un alcool monohydrique aliphatique, 20 parties en poids à 60 parties en poids du produit d'estérification (b) du sorbitane et d'un acide gras possédant au moins 16 atomes de carbone, et/ou dans lequel l'huile comprend en outre un adduit d'oxyde d'alkylène (c) par rapport au produit d'estérification (b).

**14.** Filtre selon la revendication 12, dans lequel l'huile comprend 10 parties en poids à 50 parties en poids d'un adduit d'oxyde d'alkylène (c) par rapport au produit d'estérification (b), sur la base de 100 parties en poids du produit d'estérification (a) d'un acide gras possédant au moins 16 atomes de carbone et d'un alcool monohydrique aliphatique.

**15.** Filtre selon la revendication 12, dans lequel le multifilament de lyocell auquel la frisure est appliquée, a une finesse totale de 15 000 deniers à 45 000 deniers et de 20 à 50 frisures par pouce.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210190180
- KR 1020210190181

- CN 112323161